(19) Europäisches Patentamt
European Patent Office
Office européen des brevets

(11) **EP 2 538 547 B1**

(12) **EUROPÄISCHE PATENTSCHRIFT**

(45) Veröffentlichungstag und Bekanntmachung des Hinweises auf die Patenterteilung:
**22.01.2014 Patentblatt 2014/04**

(21) Anmeldenummer: **11170941.6**

(22) Anmeldetag: **22.06.2011**

(51) Int Cl.:
*H02P 21/00* *(2006.01)*    *H02P 21/14* *(2006.01)*
*H02P 23/12* *(2006.01)*    *H02P 23/14* *(2006.01)*
*H02P 25/06* *(2006.01)*    *G05B 23/02* *(2006.01)*

(54) **Vorrichtung und Verfahren zur geberlosen Identifikation mechanischer Kenngrößen eines Linear-Asynchronmotors**

Device and method for identifying mechanical parameters of a linear induction motor without using a position sensor

Dispositif et procédé d'identification de paramètres mécaniques d'un moteur linéaire asynchrone sans capteur de position

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**26.12.2012 Patentblatt 2012/52**

(73) Patentinhaber: **Baumüller Nürnberg GmbH 90482 Nürnberg (DE)**

(72) Erfinder: **Villwock, Sebastian 95701 Pechbrunn (DE)**

(74) Vertreter: **Götz, Georg Alois Intellectual Property IP-GÖTZ Patent- und Rechtsanwälte Konigstrasse 70/Am Literaturhaus Postfach 35 45 90017 Nürnberg (DE)**

(56) Entgegenhaltungen:
**EP-A1- 2 270 522          EP-A2- 0 704 709
DE-A1- 10 315 754          DE-A1- 19 913 941
DE-A1-102009 011 674     US-A1- 2004 119 434**

**Beschreibung**

Die vorliegende Erfindung geht aus von einem Verfahren, einer Einrichtung, einer Vorrichtung und einer Verfahrensverwendung für eine geberlose Identifikation magnetomechanischer Kenngrößen, insbesondere der Masse m, eines Linear-Asynchronmotors, im Folgenden auch kurz Linearmotor genannt. Mechanische Kenngrößen ermöglichen die Charakterisierung eines Wanderfeldmotors in Bezug auf das mechanische Dynamikverhalten, so dass das mechanisch-translatorische Verhalten des Motors im Betrieb charakterisiert werden kann.

**STAND DER TECHNIK**

Aus dem Stand der Technik sind verschiedene Methoden bekannt, um das mechanische Verhalten eines Wanderfeldmotors zu bestimmen. In der Regel werden zur Bestimmung des mechanischen Verhaltens Sensordaten von Positionsgebern ausgewertet, und unter Berücksichtigung von mechanischen Strukturdaten des Wanderfeldmotors die Masse m des Sekundärteils bzw. Antriebsstrangs bestimmt. Moderne geberlos geregelte elektrische Antriebe können allerdings auf keine Sensordaten außer den gemessenen Strömen zurückgreifen, so dass im normalen Betrieb mechanische Kenngrößen nicht ermittelbar sind.

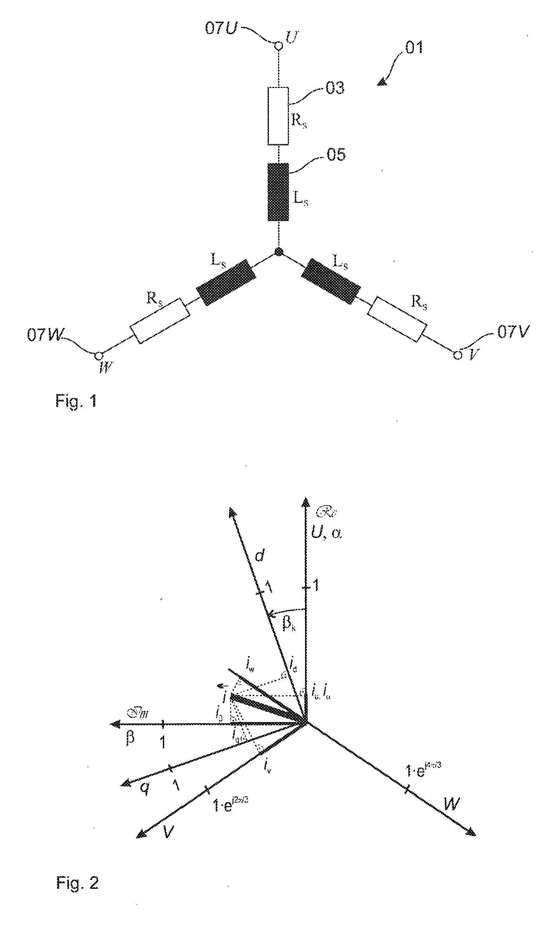

In einem Dreiphasensystem ergibt sich in Y- oder $\Delta$-Schaltung durch Einspeisung zweier Phasen jeweils der Strom der dritten Phase nach der Regel $I_u + I_v + I_w = 0$ bei fehlender Sternpunkterdung. Aus diesem Grund lässt sich ein Dreiphasensystem auch mittels zweier Koordinaten beschreiben, wobei zur Beschreibung des Gesamtstroms ein Koordinatensystem in der komplexen Ebene betrachtet werden kann, bei der die beiden Koordinaten Realteil und Imaginärteil als $\alpha$- und $\beta$-Koordinaten bezüglich der ortsfesten Ausrichtung der Primärteilwicklungen nach Fig. 1 bezeichnet werden können. Diese Umwandlung ist auch als Clarke-Transformation bekannt. Diese an und für sich zur erleichterten mathematischen Beschreibung der Regelung von Drehmotoren eingeführte Methodik wird auch bei Wanderfeldmotoren verwendet, wodurch eine für alle Arten von Motoren gleichförmige Art der Regelung erreicht wird. Das $\alpha/\beta$-Koordinatensystem beschreibt die Richtung des Stromflusses oder die Sekundärteilflussachse in dem ruhenden Bezugssystem des Primärteils des Wanderfeldmotors. Bezüglich der magnetischen Ausrichtung des Sekundärteils kann ein zweites Koordinatensystem eingeführt werden, dessen Achsen als $d$- und $q$-Achse des Sekundärteils bezeichnet werden, wie es in Fig. 2 dargestellt ist. Die $d$-Achse bezeichnet die Richtung des Sekundärteilflusses und die $q$-Achse die hierzu rechtwinklige Querflussachse. Eine Transformation vom $\alpha/\beta$-Primärteilkoordinatensystem in das $d/q$-Sekundärteilkoordinatensystem kann über den Transformationswinkel $\beta_k$ zwischen der Wicklungsachse der Phase $U$ des Primärteils und der Längsachse des Sekundärteilmagnetsfeldes hergestellt werden. Diesbezüglich können ein Gesamtmotorstrom $I$, bzw. dessen drei Phasenströme $I_U$, $I_V$ und $I_w$ im primärteilfesten $\alpha/\beta$-Koordinatensystem oder im $d/q$-Koordinatensystem betrachtet werden. Bezüglich der Umrechnung der Strangströme des Asynchronmotors in das $\alpha/\beta$-Koordinatensystem gilt folgender Zusammenhang:

$$\begin{pmatrix} i_\alpha \\ i_\beta \end{pmatrix} = \begin{pmatrix} 1 & 0 & 0 \\ 0 & \dfrac{\sqrt{3}}{3} & -\dfrac{\sqrt{3}}{3} \end{pmatrix} \begin{pmatrix} i_u \\ i_v \\ i_w \end{pmatrix}, \qquad \begin{pmatrix} i_u \\ i_v \\ i_w \end{pmatrix} = \begin{pmatrix} 1 & 0 \\ -\dfrac{1}{2} & \dfrac{\sqrt{3}}{2} \\ -\dfrac{1}{2} & -\dfrac{\sqrt{3}}{2} \end{pmatrix} \begin{pmatrix} i_\alpha \\ i_\beta \end{pmatrix},$$

der mittels Berücksichtigung des Transformationswinkels $\beta_k$ für das $d/q$-Koordinatensystem modifizierbar ist. Dabei gibt der Transformationswinkel $\beta_k$ die Sekundärteilposition wieder, siehe beispielsweise die Studienarbeit von Martin Henger "Sensorlose Positionserfassung in linearen Synchronmotoren", Diplomica Verlag GmbH, Hamburg, 2009.

Die Werte im d/q-Koordinatensystem gehen dabei mittels der Park-Transformation aus dem $\alpha/\beta$-Koordinatensystem hervor:

$$\begin{pmatrix} i_d \\ i_q \end{pmatrix} = \sqrt{\frac{2}{3}} \begin{pmatrix} \cos(\beta_k) & \sin(\beta_k) \\ -\sin(\beta_k) & \cos(\beta_k) \end{pmatrix} \begin{pmatrix} i_\alpha \\ i_\beta \end{pmatrix}$$

Zur nachfolgenden mathematischen Erfassung der Zusammenhänge wird eine Betrachtung im $\alpha/\beta$-Koordina-

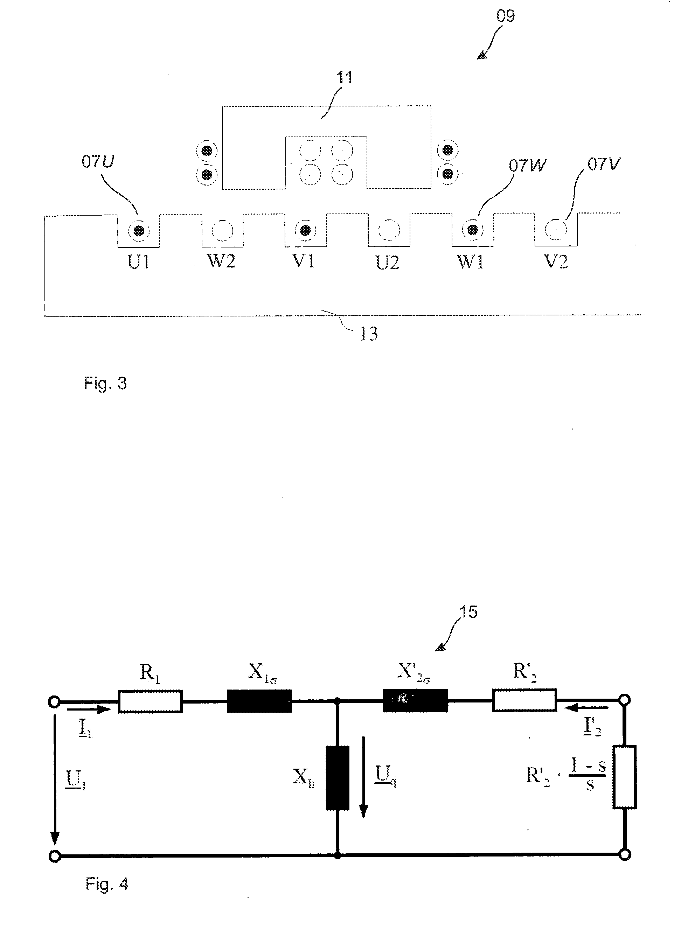

tensystem nach Fig. 2 durchgeführt, wobei das in Fig. 4 dargestellte T-Ersatzschaltbild, eine einphasige Ersatzschaltbildcharakterisierung der Drehstrom-Asynchronmaschine mit Speisespannungen und Strömen $U_1$, $I_1$ sowie $U_2/I_2$ beschreibt, das allerdings nicht für transiente Vorgänge gilt.

In der Fig. 4 ist das T-Ersatzschaltbild eines Linear-Asynchronmotors dargestellt, wobei unter Kenntnis der genannten Ersatzschaltbildgrößen das elektrische Betriebsverhalten des Drehstrommotors in einem stationären Betriebsfall, d.h. bei konstanter Belastung abschätzbar wird. Der Parameter s kennzeichnet den Schlupf, d. h. das Nacheilen der Geschwindigkeit des Sekundärteils gegenüber dem Wanderfeld. Hieraus lassen sich die Relationen zwischen eingespeisten Spannungen und auftretenden Strömen des Motors beschreiben durch :

$$\bar{U}_1^S = R_1 \cdot \bar{I}_1^S + \frac{d\bar{\Psi}_1^S}{dt} \text{ mit } \bar{\Psi}_1^S = L_1 \cdot \bar{I}_1^S + L_h \cdot \bar{I}_2^S \text{ und } L_1 = L_{1\sigma} + L_h,$$

$$\bar{U}_2^S = R_2 \cdot \bar{I}_2^S + \frac{d\bar{\Psi}_2^S}{dt} - j\Omega_L \bar{\Psi}_2^S \text{ mit } \bar{\Psi}_2^S = L_h \cdot \bar{I}_1^S + L_2 \cdot \bar{I}_2^S \text{ und } L_2 = L_{2\sigma} + L_h \; .$$

Eine Parameterbestimmung elektrischer Ersatzschaltbildgrößen im Leerlauf-, Kurzschluß- und Gleichstromversuch beruhen auf diesem T-Ersatzschaltbild. Bezüglich einer komplizierteren Betrachtung in einem später dargestellten $\alpha/\beta$ oder $d/q$-Koordinatensystem der Motorspannungen und -ströme können die gleichen Ersatzschaltbildparameter berücksichtigt werden, allerdings erlaubt diese Betrachtungsweise nicht nur eine stationäre Charakterisierung des Motors, sondern ermöglicht eine Beschreibung des dynamischen Verhaltens.

Durch Messung der elektrischen Größen lässt sich die Admittanz des Motors im Betriebsverhalten bestimmen, die sich nach folgender Gleichung ergibt:

$$G_{\alpha/\beta} = Y_{\alpha/\beta} = \frac{I_{\alpha/\beta}}{U_{\alpha/\beta}}$$

Ausgehend von den Phasenspannungen $U_U$, $U_V$ und $U_W$ und Strangströmen $I_U$, $I_V$ und $I_W$ werden diese gemäß der obigen Transformation in das $\alpha/\beta$-Koordinatensystem überführt. Somit lässt sich das elektrische Verhalten des Linearmotors mit Hilfe der Eingangsgrößen $U_1$ oder $U_2$ und Ausgangsgrößen $I_1$ oder $I_2$ betrachten. Diesbezüglich lassen sich getrennte Betrachtungsweisen bezüglich der primärteilfesten $\alpha$- und $\beta$-Achse durchführen, so dass sich beispielsweise bezüglich der $\beta$-Achse eine Übertragungsfunktion, beziehungsweise Admittanz ergibt mit:

$$G_\beta = I_{1\beta}/U_{1\beta}.$$

Die Bestimmung der Koeffizienten der Übertragungsfunktion $G_\beta$ ermöglicht die Identifikation der zugrundeliegenden Systemparameter, beispielsweise von elektrischen Ersatzschaltbildgrößen. Es gibt beispielsweise parallele Überlegungen, durch einen ähnlichen Ansatz unter Annahme eines Sekundärteilstillstands ($n$=0) die elektrischen Ersatzschaltbildgrößen $L_{1\sigma}$, $L'_{2\sigma}$, $L_h$, $R_1$ und $R'_2$ zu bestimmen.

Aus dem Stand der Technik ist zur Bestimmung mechanischer Kenngrößen eines Drehstrommotors, insbesondere zur Fehlerdiagnose mechanischer Teile oder zur mechanischen Systemidentifikation beim Betrieb in einem mechanischen Verband bekannt, ein Pseudo-Rausch-Binär-Signals (PRBS) als Anregungssignal bei umrichtergespeisten Drehstrommaschinen einzusetzen. Dabei stellt das mechanische System ein SISO-System (Single-Input Single-Output) dar, bei der mit Hilfe einer einzigen mechanischen oder elektrischen Eingangsgröße eine einzige mechanische Ausgangsgröße mittels eines mechanischen Drehgebers gemessen werden kann. Das Pseudo-Rausch-Binär-Signals wird dabei als Eingangssignal in das System eingespeist, so dass in der Ausgangsgröße ein breitbandiges Verhalten des SISO-Systems bestimmt werden kann. Mit Hilfe signaltheoretischer Methoden (Welch-Methode, Fourier-Transformation, Bestimmung von Auto- und Kreuzkorrelationsfunktion etc.) und Parameteridentifikation können Kenngrößen des mechanischen Systems bei Kenntnis der zugrundeliegenden Systemgleichungen abgeleitet werden.

Im Falle einer Bestimmung mechanischer Kenngrößen basierend auf Einspeisung und Messung rein elektrischer Größen handelt es sich allerdings um ein sogenanntes MIMO-System (Multiple-Input Multiple-Output), bei dem mehrere Eingangsgrößen (Strangspannungen) eingespeist und mehrere Ausgangsgrößen (Strangströme) extrahiert werden müssen. Aus diesem Grund können die aus dem Verfahren zur Identifikation mechanischer Größen bekannten Methoden nicht für die elektrische Systemcharakterisierung eines Drehstrommotors oder gar eines Wanderfeldmotors angewendet werden. Die Identifikation des mechanischen Systems ist umfassend in der Dissertation von Dr. Sebastian Villwock "Identifikationsmethoden für die automatisierte Inbetriebnahme und Zustandsüberwachung elektrischer Antriebe", Universität Siegen, 2007, (Druckschrift [1]) beschrieben. Des Weiteren ist eine diesbezüglich verwendete signaltheoretische Methode für die Parameteridentifikation eines mechanischen Systems in dem Journal-Paper: S. Villwock, J. M. Pacas: " Application of the Welch-Method for the Identification of Two and Three Mass Systems", IEEE Transactions on Industrial Electronics, Vol. 55, No. 1, Januar 2008, S. 457-466 (Druckschrift [2]) beschrieben. Ein gattungsähnliches Verfahren ist im Rahmen eines Konferenzartikels in: P. Szczupak, J. M. Pacas: "Automatic Identification of a PMSM Drive Equipped with an Output LC-Filter", IEEE Industrial Electronics, IECON 2006, 32nd Annual Conference on November 2006, S. 1143-1148 (Druckschrift [3]) vorgestellt.

Aus der DE 199 13 941 A1 ist ein Steuergerät zur Regelung eines Asynchronmotors bekannt, wobei die Drehzahl des Asynchronmotors ohne Einsatz eines Drehfühlers auf einen veränderbaren Wert geregelt werden kann.

Aus der US 2004/0119434 A1 ist es bekannt, aus einem gemessenen Spannungsverlauf Modellparameter eines Linearmotors zu approximieren.

Aufgabe der vorliegenden Erfindung ist es, ein Verfahren zur Bestimmung von mechanischen Kenngrößen, insbesondere der Masse m des Sekundärteils, eines Linear-Asynchronmotors vorzuschlagen, wobei eine Parameteridentifikation ohne Gebersensoren ermöglicht wird, hierbei das Sekundärteil Auslenkungsbewegungen ausführen kann und durch eine einzige Messung die mechanische Kenngrößen ermittelt werden können. Vorteilhafte Fortbildungen der Erfindung sind Gegenstand der Unteransprüche.

Eine weitere Aufgabe der Erfindung besteht darin, eine Vorrichtung zur geberlosen Identifikation vorzuschlagen, bei der die Identifikation der mechanischen Kenngrößen nur über Messung elektrischer Größen vornehmbar ist, so dass keine Sensoren zur Bestimmung des mechanischen Verhaltens der Linear-Asynchronmaschine mit angeschlossenem Abtriebsstrang herangezogen werden müssen.

## OFFENBARUNG DER ERFINDUNG

In einem ersten Aspekt der Erfindung wird ein Verfahren nach Anspruch 1 zur geberlosen Identifikation mechanischer Kenngrößen, insbesondere der Masse m des Sekundärteils bzw. Antriebsstrangs eines Linear-Asynchronmotors vorgeschlagen, das zumindest folgende Schritte umfasst:

- Konstantspannungseinprägung $U_{1\alpha}$ in $\alpha$-Achsenrichtung zur Erzeugung eines Konstantmagnetflusses;
- Testsignalspannungseinspeisung $U_{1\beta}$ in $\beta$- Achsenrichtung des Linear-Asynchronmotors (09), wobei die $\alpha$-Achsenrichtung konstant bestromt bleibt;
- Meßsignalstrommessung $I_{1\beta}$ in Primärteil-$\beta$-Achsenrichtung des Linear-Asynchronmotors (09);
- Identifikation von mechanischen Kenngrößen des Linear-Asynchronmotors (09) auf Basis der Testsignalspannung $U_{1\beta}$ und des Meßsignalstroms $I_{1\beta}$;

wobei die Testsignaleinspeisung in den Linear-Asynchronmotor (09) derart erfolgt, dass das Sekundärteil (11) aufgrund der Testsignaleinspeisung Auslenkungsbewegungen (75) ausführen kann.

Gemäß der Erfindung ist das Testsignal ein Pseudo-Rausch-Binär-Signal. Das Testsignal sollte eine hohe Bandbreite aufweisen, um eine möglichst hohe Frequenzauflösung des elektrischen Motorverhaltens zu ermöglichen. Weißes Rauschen besitzt ein gleichverteiltes breitbandiges Frequenzspektrum. Ein Pseudo-Rausch-Binär-Signal (PRBS) ist ein binäres Signal, welches das Spektrum von weißem Rauschen approximiert. Es kann typischerweise die Werte +1 und -1 annehmen und wird alternativ zum weißen Rauschen verwendet. Vorteilhaft ist insbesondere die Reproduzierbarkeit des Signals, wobei häufig in der Regelungstechnik ein PRB-Signal zur Analyse eine Impulsantwort mittels einer Maximum-Length-Sequence verwendet wird. Ein PRB-Testsignal lässt sich sehr einfach durch linear rückgekoppelte Schieberegister erzeugen und kann beispielsweise durch einen DSP (Digital Signal Processor), FPGA (Field Programmable Gate Array) oder Mikrocontroller eines Motorreglers zur Ansteuerung des Wechselrichters erzeugt werden. Somit kann jede Motoransteuerelektronik solch ein PRB-Signal ohne größere Modifikation erzeugen und als Motorspannung in den Motor einspeisen.

Auslenkungsbewegungen des Sekundärteils bedeuten, dass sich die Lage $\beta_k$ des Sekundärteils gegenüber dem Primärteil grundsätzlich beliebig während des Messvorgangs ändern kann. Die Bewegung des Sekundärteils kann selbstverständlich nur solange fortgeführt werden wie das Sekundärteil an keine Begrenzung stößt. Eine Konstantspannungseinprägung in die $\alpha$-Achse des Primärteils bewirkt einen Konstantstrom $I_{1\alpha}$. Parallel hierzu wird in die $\beta$-Achsenrichtung des Primärteils ein Testsignal eingespeist. Die Struktur des Testsignals bestimmt, welche Frequenzkomponenten oder -bereiche messbar sind und mit welcher Genauigkeit die mechanischen Kenngrößen identifiziert werden können, wobei Parameter entsprechend der Frequenzabdeckung des Testsignals extrahiert werden können. Bei Einspeisung der Testspannung $U_{1\beta}$ kann ein Meßsignalstrom $I_{1\beta}$ gemessen werden. Die Einspeisung der beiden Strangspannungen zur Messung der beiden Strangströme kann beispielsweise mittels eines 2/3-Phasen-Konverters erfolgen, der obiger Matrixrelation folgend aus den beiden Spannungen $U_{1\alpha}$ und $U_{1\beta}$ die drei Phasenspannungen $U_U$, $U_V$ und $U_W$ erzeugen bzw. aus den drei gemessenen Strömen $I_U$, $I_V$ und $I_W$ die beiden Ströme $I_{1\alpha}$ und $I_{1\beta}$ transformieren kann. Eine Einspeisung des Testsignals $U_{1\beta}$ kann beispielsweise durch eine Steuerung eines Wechselrichters der Motorsteuerungsvorrichtung des Wanderfeldmotors erfolgen. Alternativ können die Spannungen $U_{1\alpha}$, $U_{1\beta}$ direkt in die Stränge der Linear-Asynchronmaschine eingespeist werden. Die Messung des Strangstroms $I_{1\beta}$ kann über die selben Strommessinstrumente erfolgen, die bei einer geberlosen Regelung im Betrieb des Wanderfeldmotors verwendet werden. Im Zeitbereich können die eingespeisten Testsignalspannungen und die gemessenen Meßsignalströme als digital erfasste zeitliche Abtastwerte aufgezeichnet werden, und auf deren Basis können die mechanischen Kenngrößen bestimmt werden. Dies erfolgt bevorzugt durch eine Frequenzbereichsanalyse, unter Verwendung von Methoden der digitalen Signalverarbeitung (Welch-Methode, Fourier-Transformation, Bestimmung von Auto- und Kreuzkorrelationsfunktion etc.) der aufgezeichneten Zeitbereichsdaten, und einer Analyse des Frequenzgangs $G_\beta$. Unter Kenntnis der vorgenannten Admittanzfunktion, die als Übertragungsfunktion im Frequenzbereich dargestellt werden kann, können die Koeffizienten der Übertragungsfunktion mittels einer geeigneten signaltheoretischen Methode ermittelt werden, wobei die koeffizientenbestimmenden Parameter zur Identifikation der mechanischen Kenngrößen, insbesondere der Motor-Masse m und des angeschlossenen Antriebsstrangs, beispielsweise bewegte Maschinenteile, herangezogen werden können. Der mechanische Antriebsstrang besteht aus dem Sekundärteil der elektrischen Antriebsmaschine und einer gegebenenfalls angekoppelten mechanischen Last einschließlich Wellen und ähnliches.

Im Gegensatz zu einer erfindungsgemäßen unsymmetrischen Testsignaleinspeisung lediglich in die β-Achse des Primärteils würde eine identische Einspeisung des Testsignals in α- und β-Koordinatenrichtung ohne Konstantspannungsbeaufschlagung keine Bewegung in der Maschine erzeugt werden, so dass das Sekundärteil bewegungsfrei und in seiner Lage verbleiben würde. Somit könnten keine Aussagen über mechanische Größen wie die Masse m getroffen werden.

Ist am Sekundärteil ein mechanischer Abtriebsstrang einer Maschine angeschlossen, so wird die Masse des gesamten mechanischen Verbundes bestimmbar. Eine Bestimmung des Frequenzgangs des Systems unter Kenntnis der zugrunde liegenden Admittanz-Formel $G = Y$ ermöglicht die Bestimmung der Parameter der Übertragungsfunktion. Somit kann durch eine Einspeisung eines insbesondere breitbandigen Testsignals mittels einer einzigen Messung Aussagen über die mechanischen Kenngrößen, die in den Koeffizienten der Übertragungsfunktion enthalten sind, getroffen werden. Hierzu werden signaltheoretische Methoden herangezogen, die die gemessenen Zeitbereichsdaten in Frequenzbereichsdaten transformieren, wobei der Frequenzgang formelmäßig erfasst werden kann, und mittels einer Parameterextraktion aus dem Frequenzgang die Koeffizienten der zugrundeliegenden Übertragungsfunktion und somit die zugrundeliegenden Parameter und damit die mechanischen Kenngrößen identifiziert werden können.

Grundsätzlich kann statt einer Testspannungsvorgabe und Meßstrombestimmung auch eine Teststromvorgabe mit Meßspannungserfassung erfolgen. Allerdings weisen insbesondere leistungsstarke Motoren ein hochinduktives Verhalten auf, so daß zur Einprägung rechteckförmiger Stromschaltimpulse hohe Treiberspannungen angelegt werden müßten, worduch eine Teststromeinprägung nur mit hohem Aufwand möglich ist.

Gemäß einer vorteilhaften Weiterbildung kann das Verhältnis von Konstantspannung $U_{1a}$ zur Testsignalspannung $U_{1\beta}$ derart optimiert wählbar ist, um eine Auslenkungsbewegung in einer Höhe zu erreichen, so dass die mechanischen Kenngrößen mit einer vorbestimmbaren Genauigkeit ermittelt werden können. Während der Einspeisung des Testsignals in die Primärteil-α-Koordinatenrichtung α-wird eine Randbedingung erzeugt, so dass eine vereinfachte Bestimmung der mechanischen Kenngrößen ermöglicht wird. Allerdings bestimmt die Größe der Konstantstromeinspeisung eine Variation von Koeffizienten der Übertragungsfunktion und eine Ausprägung von Frequenzgangeigenschaften der β-Admittanzfunktion. Somit ist es wichtig, dass die Amplituden der Konstantspannung und des Testsignals in einem angemessenen Verhältnis stehen. Wäre die Konstantspannung in der α-Achse deutlich zu groß oder zu klein, so könnte die Parameteridentifikation nur ungenaue Werte liefern. Das hier beschriebene Verfahren beruht darauf, dass die Maschine sich aus der Flussachse heraus bewegen kann. Hierzu kann es vorteilhaft denkbar sein, das Verhältnis von Konstantspannung $U_{1\alpha}$ zur Testsignalspannung $U_{1\beta}$ und/oder die Höhe der Konstantspannung $U_{1\alpha}$ zu variieren und jeweils Parameteridentifikationen mit geänderten Spannungswerten durchzuführen, wobei die sich ergebenden Parameter als Durchschnitt oder gewichteter Parameter aus den Ergebnissen der einzelnen Parameteridentifikationen ermittelbar sein können. Somit können Fehler in der Bestimmung vermindert werden, so dass ein genaueres Ergebnis erzielt werden kann.

Gemäß einer vorteilhaften Weiterbildung können zur Identifikation der mechanischen Kenngrößen weitere Größen, insbesondere Ersatzschaltbildkenngrößen sowie mechanische Strukturgrößen wie Polpaarzahl $p$ und/oder elektrische Meßgrößen wie $I_{1\alpha} = I_{DC}$ berücksichtigt oder ebenfalls identifiziert werden. Aufgrund der eingespeisten Spannungen und gemessenen Strömen im ortsfesten Koordinatensystem kann die Übertragungsfunktion unter der Annahme $U_{1\alpha} =$ konstant und der Einspeisung eines Testsignals in $U_{1\beta}$ sowie der Kenntnis eines sich einstellenden DC-Stroms

$I_{1\alpha}$ und des interessierenden Meßsignalstroms $I_{1\beta}$ folgende Herleitung der Modellfunktion gemacht werden:

Die Spannungsgleichungen im primärteilfesten Bezugssystem lauten:

$$\bar{U}_1^S = R_1 \cdot \bar{I}_1^S + \frac{d\bar{\Psi}_1^S}{dt} \text{ mit } \bar{\Psi}_1^S = L_1 \cdot \bar{I}_1^S + L_h \cdot \bar{I}_2^S \text{ und } L_1 = L_{1\sigma} + L_h,$$

$$\bar{U}_2^S = R_2 \cdot \bar{I}_2^S + \frac{d\bar{\Psi}_2^S}{dt} - j\Omega_L \bar{\Psi}_2^S \text{ mit } \bar{\Psi}_2^S = L_h \cdot \bar{I}_1^S + L_2 \cdot \bar{I}_2^S \text{ und } L_2 = L_{2\sigma} + L_h.$$

Da die Spannung in $\alpha$-Richtung $U_{1\alpha}$ = konstant ist, ergibt sich bei stillstehendem Motor und nach Abklingen der transienten Vorgänge ein konstanter DC-Strom $I_{1\alpha}$ in gleicher Richtung. Mit $I_{1\alpha}$ = konstant = $I_{DC}$ ergeben sich die Flussgleichungen in Komponentendarstellung zu:

$$\Psi_{1\alpha} = L_1 \ I_{DC} + L_h \ I_{2\alpha}, \quad \Psi_{1\beta} = L_1 \ I_{1\beta} + L_h \ I_{2\beta}$$

Es zeigt sich, dass bei Anregung der Maschine mit einem Testsignal in $\beta$-Richtung der Gleichstrom in $\alpha$-Richtung konstant bleibt. Es folgt somit für den Realteil der Ständerspannungsgleichung der Zusammenhang:

$$\underbrace{U_{1\alpha}}_{=konst} = \underbrace{R_1 \ I_{1\alpha}}_{konst} + L_1 \ \underbrace{\frac{dI_{DC}}{dt}}_{=0} + L_h \ \underbrace{\frac{dI_{2\alpha}}{dt}}_{\rightarrow =0}.$$

Somit folgt für den Realteil des Raumzeigers der Sekundärteilflussverkettung:

$$\Psi_{2\alpha} = L_1 \ I_{DC}$$

$$U_{2\alpha} = 0 = \underbrace{R_2 \ I_{2\alpha}}_{=0} + L_h \cdot \underbrace{\frac{dI_{DC}}{dt}}_{=0} + L_2 \cdot \underbrace{\frac{dI_{2\alpha}}{dt}}_{=0} + \Omega_L \cdot \Psi_{2\beta}$$

$$\rightarrow U_{2\alpha} = \Omega_L \cdot \Psi_{2\beta} = 0, \text{ da Kurzschlussläufer und somit } \Psi_{2\beta} = 0$$

Der Raumzeiger der Sekundärteilflussverkettung weist demzufolge lediglich einen Realteil auf. Die Spannungsgleichungen in $\beta$-Richtung lauten somit:

$$U_{1\beta} = R_1 \ I_{1\beta} + L_1 \cdot \frac{dI_{1\beta}}{dt} + L_h \cdot \frac{dI_{2\beta}}{dt}$$

$$U_{2\beta} = R_2 \ I_{2\beta} + L_h \cdot \frac{dI_{1\beta}}{dt} + L_2 \cdot \frac{dI_{2\beta}}{dt} - \Omega_L \cdot \underbrace{\Psi_{2\alpha}}_{=L_h \ I_{DC}}$$

Übergang in den Bildbereich der Laplace-Transformation:

$$U_{1\beta} = I_{1\beta}\left(R_1 + s\ L_1\right) + L_h \cdot s \cdot I_{2\beta}$$

$$\rightarrow I_{2\beta} = \frac{U_{1\beta} - I_{1\beta}\left(R_1 + s\ L_1\right)}{L_h \cdot s} \qquad\qquad \text{(Gl 1)}$$

dabei gilt $U_{2\beta} = I_{2\beta}(R_2 + s\ L_2) + L_h \cdot s \cdot I_{1\beta} - \Omega_L \cdot L_h \cdot I_{DC} = 0$, da der Linear-Asynchronmotor einen Kurzschlussläufer als Sekundärteil aufweist, so dass gefolgert werden kann:

$$\rightarrow \qquad 0 = \frac{U_{1\beta}}{L_h \cdot s}\left(R_2 + s\ L_2\right) + I_{1\beta}\left(L_h \cdot s - \frac{\left(R_1 + s\ L_1\right)\left(R_2 + s\ L_2\right)}{L_h \cdot s}\right) - \Omega_L \cdot L_h \cdot I_{DC}$$

(Gl 2)

Zur Herleitung der Übertragungsfunktion kann im Folgenden auf das Modell der Asynchron-Drehmaschine zurückgegriffen werden, da das Modell der Linear-Asynchronmaschine letzten Endes auf diesem Modell aufbaut. Dabei werden die rotationssymmetrischen Teile der Asynchron-Drehmaschine in flache Primär- und Sekundärteile des Linearmotors "gepresst" bzw. "aufgeschnitten".

Für das Drehmoment einer Asynchron-Drehmaschine gilt:

$$M = \frac{3}{2} \cdot p \cdot \text{Im}\left\{\vec{\Psi}_1^{S*}\ \bar{I}_1^S\right\} = \frac{3}{2} \cdot p \cdot \text{Im}\left\{\left(\Psi_{1\alpha} - j\ \Psi_{1\beta}\right) \cdot \left(I_{1\alpha} + j\ I_{1\beta}\right)\right\} = \frac{3}{2} \cdot p \cdot \left(\Psi_{1\alpha}\ I_{1\beta} - \Psi_{1\beta}\ I_{1\alpha}\right)$$

Mit $\Psi_{1\alpha} = L_h\ I_{DC}$ und $\Psi_{1\beta} = L_1\ I_{1\beta} + L_h\ I_{2\beta}$ erhält man

$$M = \frac{3}{2} \cdot p \cdot I_{DC} \cdot \left(L_h\ I_{1\beta} - L_1\ I_{1\beta} - L_h\ I_{2\beta}\right)$$

Mit (Gl 1) eingesetzt in obige Relation folgt:

$$M = \frac{3}{2} \cdot p \cdot I_{DC} \cdot \left(-\frac{U_{1\beta}}{s} + I_{1\beta} \cdot \frac{R_1 + s\ L_1}{s} + L_h\ I_{1\beta} - L_1\ I_{1\beta}\right) = \frac{3}{2} \cdot p \cdot I_{DC} \cdot \left(-\frac{U_{1\beta}}{s} + I_{1\beta} \cdot \frac{R_1 + s\ L_h}{s}\right)$$

Der Zusammenhang zwischen mechanischer und elektrischer Kreisfrequenz lautet:

$$\Omega_L = p \cdot \Omega_m = p \cdot \frac{1}{J} \int M\ dt$$

Im Bildbereich erhält man mit obigem Zusammenhang für das Drehmoment

$$\Omega_L = \frac{p}{J} \cdot \frac{1}{s} \cdot \frac{3}{2} \cdot p \cdot \frac{I_{DC}}{s} \cdot \left(-U_{1\beta} + I_{1\beta}\left(R_1 + s\ L_h\right)\right) = \frac{3}{2} \frac{p^2}{J} \frac{I_{DC}}{s^2} \cdot \left(-U_{1\beta} + I_{1\beta}\left(R_1 + s\ L_h\right)\right),$$

da sich im Laplacebereich eine Zeitintegration als Division durch s ergibt.
Einsetzen dieses Zusammenhangs für $\Omega_L$ in (Gl 2) ergibt

$$0 = \frac{U_{1\beta}}{L_h \cdot s}\left(R_2 + s\ L_2\right) + I_{1\beta}\left(L_h s - \frac{\left(R_1 + s\ L_1\right)\left(R_2 + s\ L_2\right)}{L_h \cdot s}\right) - \frac{3}{2}\frac{p^2}{J}\frac{I_{DC}^2}{s^2}\left(-U_{1\beta} + I_{1\beta}\left(R_1 + s\ L_h\right)\right)\cdot L_h$$

Nach einigen Umformungen erhält man die gewünschte Übertragungsfunktion:

$$G_\beta = \underline{Y} = \frac{I_{1\beta}}{U_{1\beta}} = \frac{-2\cdot\left(R_2 + s\ L_2\right)\cdot s\cdot J - I_{DC}^2\cdot p^2\cdot L_h^2\cdot 3}{2\cdot J\cdot s\left(L_h^2\cdot s^2 - R_1\ R_2 - s\left(L_1\ R_2 + L_2\ R_1\right) - s^2\cdot L_1\ L_2\right) - I_{DC}^2\cdot p^2\cdot L_h^2\cdot\left(R_1 + s\ L_h\right)\cdot 3}$$

die sich mittels $k := \dfrac{3\cdot I_{DC}^2\cdot p^2\cdot L_h^2}{2\cdot J}$ dergestalt vereinfachen lässt:

$$G_\beta = \underline{Y} = \frac{I_{1\beta}}{U_{1\beta}} = \frac{s^2\cdot L_2 + s\cdot R_2 + k}{-s^3\cdot\left(L_h^2 - L_1\ L_2\right) + s^2\cdot\left(L_1\ R_2 + L_2\ R_1\right) + s\cdot\left(R_1\ R_2 + k\ L_h\right) + k\ R_1} \quad \text{(Gl 3)}$$

Diese Gleichung lässt sich parametriert schreiben als:

$$G_\beta = \underline{Y} = \frac{I_{1\beta}}{U_{1\beta}} = \frac{s^2\cdot a_2 + s\cdot a_1 + a_0}{s^3\cdot b_3 + s^2\cdot b_2 + s\cdot b_1 + b_0}$$

mit

$$a_2 = L_2,\ a_1 = R_2,\ a_0 = k,\ b_3 = -\left(L_h^2 - L_1 L_2\right),\ b_2 = \left(L_1 R_2 + L_2 R_1\right),\ b_1 = \left(R_1 R_2 + k\ L_h\right),\ b_0 = kR_1.$$

Zur Bestimmung der Koeffizienten $a_0$, $a_1$, $a_2$, $b_0$, $b_1$, $b_2$ und $b_3$ wird das Wissen über die elektrischen Größen der Ersatzschaltbildparameter $L_{1\sigma}$, $L'_{2\sigma}$, $L_h$, $R_1$ und $R'_2$ sowie über die Polpaarzahl $p$, die Höhe des DC-Stroms $I_{1\alpha}$ benötigt. Die Polpaarzahl als Strukturgröße des Motors ist im vorhinein bekannt, die Höhe des DC-Stroms lässt sich messtechnisch bestimmen. Die Größe der Ersatzschaltbildparameter kann beispielsweise aus Kurzschluss-, Gleichstrom- und Leerlaufversuchen ermittelt werden, oder durch ein auf einer vergleichbaren Erfindungsidee beruhenden Strom/Spannungsmessungsmessverfahren, das Gegenstand einer parallelen Patentanmeldung ist, ermittelt werden. Unter Kenntnis dieser Größen kann der Parameter $k$ und hieraus die Masse m des Sekundärelements bzw. des Antriebsstrangs identifiziert werden. Daneben können die Kenngrößen oder Ersatzschaltbildparameter, die in den Koeffizienten der Übertragungsfunktion charakterisiert sind, ebenfalls im Rahmen der Parameteridentifikation bestimmt werden. So ist denkbar, aus den bestimmten Koeffizienten der Übertragungsfunktion alle in die Übertragungsfunktion einfließenden Parameter, zumindest jedenfalls die elektrischen Ersatzschaltbildparameter zu identifizieren.
Bei der Identifikation der Parameter müssen auch die translatorischen Bewegungen berücksichtigt werden. Hinsichtlich der folgenden Ausführungen wird dabei auf Dierk Schröder, Elektrische Antriebe - Grundlagen, 4. Auflage, Springer-Verlage (Kapitel 9: Linearmotoren) verwiesen.
Die Schubkraft F der linearen Asynchronmaschine lässt sich aus der Drehmomentgleichung herleiten:

$$F = \frac{P_\delta}{v_w},$$

wobei $P_\delta$ die Luftspaltdrehfeldleistung und $v_w$ die Geschwindigkeit des Wanderfeldes sind.

Der Frequenzgang der Mechanik ergibt sich dann zu

$$G_{mech}(j\omega) = f(v, F) = \frac{v_M(j\omega)}{F(j\omega)},$$

wobei $v_M$ das (gemessene) Geschwindigkeitssignal ist.

Grundsätzlich kann eine Frequenzbereichstransformation von abgetasteten Zeitbereichsdaten zur Identifikation der Ersatzschaltbildparameter im Frequenzbereich beliebig erfolgen. Gemäß einer vorteilhaften Weiterbildung der Erfindung kann die Identifikation der Ersatzschaltbildparameter eine Fouriertransformation nach einem Periodogramm-Verfahren, bevorzugt ein Bartlett-Verfahren, insbesondere einem Welch-Verfahren umfassen. Im Rahmen eines Periodogramm-Verfahrens wird eine spektrale Leistungsdichte durch eine Fourier-Transformation einzelner Datenblöcke erreicht. Die Qualität der Spektralschätzung kann verbessert werden, indem eine Anzahl voneinander unabhängiger Periodogramme gemittelt wird. Dieses Verfahren ist in der Literatur unter dem Namen Bartlett-Methode bekannt, bei dem das gemessene Signal in Abschnitte aufgeteilt wird. Die Welch-Methode stellt eine Erweiterung der von Bartlett vorgeschlagenen Vorgehensweise dar. Zur Reduzierung des Leck-Effekts (engl. Leakage-effect) kommen hier bestimmte Fensterfunktionen zum Einsatz. Der störende Leck-Effekt tritt dann auf, wenn der Signalabschnitt nicht periodisch, ein ganzzahliges Vielfaches der Periode oder dieser Signalabschnitt an den Rändern von null verschieden ist. Die Anwendung eines Welch-Verfahrens bei der Identifikation eines Zwei- oder Dreimassensystems ist bereits aus der oben genannten Druckschrift [2] bekannt. Das Welch-Verfahren spaltet $M$-Abtastwerte in $K$-Teilfolgen auf, die mit einer Fensterfunktion gewichtet werden, und auf die eine Fouriertransformation angewendet wird. Die in der Druckschrift [1] beschriebene Welch-Methode ermöglicht die Transformation einer beliebigen Zahl von Abtastwerten mit einer möglichst hohen Genauigkeit in den Frequenzbereich. Hierbei werden die Zeitbereichsdaten gefenstert, die gefensterten Daten in Teilfolgen aufgeteilt und fouriertransformiert, und hieraus Periodigramme ermittelt, die zur Bestimmung der Übertragungsfunktion, in diesem Fall der Admittanz-Funktion, im Frequenzbereich herangezogen werden können.

Alternativ hierzu kann allerdings auch eine Korrelogramm-Methode, die in der Literatur auch unter dem Namen Blackman-Tukey-Schätzung bekannt ist, eingesetzt werden Dabei erfolgt die Spektralschätzung auf Grundlage einer Autokorrelationsfunktion (AKF) und einer Kreuzkorrelationsfunktion (KKF), die aus dem Testsignal (Anregungssignal) und dem Meßsignal (Antwortsignal) berechnet wird. Bei diesem Ansatz erhält man die spektrale Leistungsdichte durch Fourier-Transformation der zuvor geschätzten AKF und KKF. Die Welch-Methode liefert allerdings robustere Ergebnisse.

Ausgehend von der im Frequenzbereich vorliegenden Darstellung einer bekannten Übertragungsfunktion, beispielsweise des Admittanzverlaufs, können mechanische Kenngrößen des Wanderfeldmotors extrahiert werden. Hierzu gibt es bereits einige numerische Ansätze. Besonders vorteilhaft kann ein Levenberg-Marquardt-Algorithmus in einer Weiterbildung der Erfindung verwendet werden, um die Kenngrößen mittels einer Übertragungsfunktionsparameterbestimmung zu identifizieren. Alternativ kann beispielsweise ein Verfahren nach Nelder und Mead verwendet werden, wobei allerdings der Levenberg-Marquardt-Algorithmus, insbesondere bei stark verrauschten Datensätzen robustere Ergebnisse liefert. Er gehört zur Gruppe von Gradienten-Verfahren, wobei durch iteratives Minimieren einer Fehlerfunktion bessere Parametervektoren berechnet werden können, die den Koeffizienten der Übertragungsfunktion entsprechen. Das Levenberg-Marquardt-Verfahren gilt momentan als Standardverfahren für nicht lineare Optimierungen. Es ist eine Mischung aus Gradienten-Verfahren und Inversion einer Hesse-Matrix und wird in der Literatur auch als Methode des steilsten Abstiegs bezeichnet. Die Inversion der Hesse-Matrix wird auch als Gauss-Newton-Verfahren bezeichnet. In Druckschrift [1] ist eine detaillierte Darstellung der Anwendung des Levenberg-Marquardt-Algorithmus vorgestellt, wobei ausgehend von einer Übertragungsfunktion:

$$G = \frac{s^2 \cdot a_2 + s \cdot a_1 + a_0}{s^3 \cdot b_3 + s^2 \cdot b_2 + s \cdot b_1 + b_0}$$

und unter Vorlage des Frequenzgangs des Systems die unbekannten Koeffizienten $a_0$, $a_1$, $a_2$, $b_0$, $b_1$, $b_2$ und $b_3$ bestimmt werden können. Im Vergleich mit der oben genannten Admittanzdarstellung entsprichen diese Koeffizienten den Parametern: $a_2 = L_2$, $a_1 = R_2$, $a_0 = k$, $b_3 = -\left(L_h^2 - L_1 L_2\right)$, $b_2 = (L_1 R_2 + L_2 R_1)$, $b_1 = (R_1 R_2 + k\, L_h)$, $b_0 = k R_1$. Durch die Ermittlung der unbekannten Koeffizienten $a_0$, $a_1$, $a_2$, $b_0$, $b_1$, $b_2$ und $b_3$ lässt sich somit zumindest die Masse m identifizieren, allerdings können auch die weiteren Größen, insbesondere elektrischen Ersatzschaltbildparameter hierdurch identifizierbar sein.

Gemäß einer vorteilhaften Weiterbildung der Erfindung können die identifizierten mechanischen Kenngrößen bei einer Einstellung und/oder Optimierung von Wechselrichter-Steuerparametern und/oder zur Motorüberwachung verwendet werden. Bei der Regelung moderner Linear-Asynchronmaschinen werden Motorsteuerungsvorrichtungen eingesetzt, die bei schnellen Geschwindigkeitsübergängen oder bei Bereitstellung dynamisch regelbarer Abtriebsenergie aufgrund der Kenntnis des dynamischen mechanischen Verhaltens entsprechend den Wechselrichter steuern können bzw. die Strangantriebsspannungen derart vorgeben können, dass die Maschine optimal ohne Überschwingen die gewünschten Arbeitsaufgaben erfüllen kann. In diesem Zusammenhang werden die Begriffe Steuerung und Regelung synonym verwendet. Die Kenntnis der mechanischen Dynamikgrößen, insbesondere der Masse m der Antriebsstrecke kann der Parametrierung des Stromreglers dienen, dessen Anforderung an eine hohe Dynamik als innerster Regler am höchsten ist. Insbesondere anspruchsvolle Regelungsverfahren, die über die von konventionellen PI-Reglern hinausgehen, verlangen eine präzise Kenntnis des dynamischen Maschinenverhaltens, insbesondere der Masse m. Hierbei sind insbesondere Zustandsraumregler, Dead-Beat-Regler oder Modellfolgeregler zu nennen. Da in jüngster Zeit insbesondere sensorlose Motorsteuerungen eingesetzt werden, können mittels des vorgeschlagenen geberlosen Verfahrens das Dynamikverhalten in einer komplexen Maschinenumgebung ermittelt werden, und der Motorregler vor Ort eingestellt werden. Die Masse m stellt eine entscheidende Kenngröße des dynamischen Antriebsverhaltens dar, so dass insbesondere bei der Regelung komplexer transienter Übergangsvorgänge der Maschine eine genaue Ansteuerung des Wechselrichters ermöglicht wird. Hierbei wird eine überschwingfreie Reglereinstellung und eine optimiert schnelle Dynamikregelung des Motors ermöglicht. Während der Analyse der mechanischen Kenngrößen bewegt sich das Sekundärteil nur geringfügig ohne Gefahr einer mechanischen Überlastung, wobei die Masse im eingebauten Zustand des Motors ohne merklichen Einfluss des Abtriebsstrangs elektrisch identifiziert werden kann. Eine Reglerparametrierung dient der Optimierung der Steuerparameter des Wechselrichters, wobei eine Abweichung der Kenngrößen von beispielsweise vorhergegangenen Messungen zur Fehlerüberwachung des Motors oder zur Verschleißkontrolle berücksichtigt werden kann. Insbesondere kann der Einsatz des Verfahrens im Rahmen eines "Condition Monitoring" des Motors vorteilhaft sein, so dass von Zeit zu Zeit das Verfahren die Kenngrößen neu ermitteln, adaptiv den Motorregler anpassen und bei auffälligen Abweichungen gegenüber zuvor identifizierten oder voreinstellbaren Parameterwerten eine Fehlersignalisierung ausgeben kann, so dass Motor oder Ansteuerelektronik überprüft werden können.

Gemäß eines nebengeordneten Aspekts der Erfindung wird eine Identifikationseinrichtung nach Anspruch 7 zur geberlosen mechanischer Kenngrößen, insbesondere Masse m des Sekundärteils eines Linear-Asynchronmotors vorgeschlagen, die zur Durchführung eines Verfahrens nach einem der vorgenannten Ausführungsbeispiele geeignet ist. Die Identifikationseinrichtung umfasst eine Wechselrichter-Interfaceeinheit, die zur steuernden Kommunikation und zur Sekundärteilstillstandsbestimmung mit einer Wechselrichter-Steuereinrichtung verbindbar ist. Die Identifikationseinrichtung umfasst eine Testsignalerzeugungseinrichtung zur Erzeugung eines $\alpha/\beta$-Testsignals, eine *U/V/W*-Transformationseinheit zur Transformation des $\alpha/\beta$-Testsignals in ein *U/V/W*-Steuertestsignal, eine $\alpha/\beta$-Transformationseinheit zur Transformation gemessener *U/V/W*-Meßsignalströme in $\alpha/\beta$-Meßsignalströme und eine Parameteridentifikationseinheit zur Identifikation der mechanischen Kenngrößen. Die Identifikationseinrichtung ist dadurch gekennzeichnet, dass das Testsignal ein Pseudo-Rausch-Binär-Signal ist, welches das Spektrum von weißem Rauschen approximiert.

Somit betrifft diese Erfindung eine Identifikationseinrichtung, die dazu ausgelegt ist, ein vorgenanntes Verfahren auszuführen und hierzu die Möglichkeit eröffnet, mittels einer Wechselrichter-Interfaceeinheit mit einer Wechselrichter-Steuereinrichtung, insbesondere mit den Halbleiterschaltbauteilen des Wechselrichters zu kommunizieren, um diese zu schalten bzw. deren Betriebszustand abzufragen. Durch Vorgabe einer $U_\alpha$ Gleichspannung kann der Wechselrichter einen Konstantstrom $I_{DC}$ in die $\alpha$-Achse des Motors einprägen. Parallel hierzu wird in der $\beta$-Achse eine Testsignalspannung vorgegeben, aufgrund derer ein Messsignalstrom $I_\beta$ gemessen werden kann, wodurch das Sekundärteil in eine Hin- und Herbewegung versetzt werden kann. Die Identifikationseinrichtung umfasst eine Testsignalerzeugungseinrichtung, die die DC-Spannung der $\alpha$-Achse und das $\beta$-Testsignal erzeugen kann, wobei das Testsignal, insbesondere ein PRB-Rauschsignal, mittels einer *U/V/W*-Transformationseinheit in ein *U/V/W*-Steuertestsignal umgewandelt werden kann, das der Wechselrichter-Steuereinrichtung zuführbar ist. Das Steuertestsignal erzeugt in dem Motor ein entsprechendes Testsignal in den drei Motorsträngen. Des Weiteren umfasst die Identifikationseinrichtung eine $\alpha/\beta$-Transformationseinheit, die die gemessenen $I_U$, $I_V$ und $I_w$ -Messsignalströme in $\alpha/\beta$-Messsignalströme $I_\alpha$ und $I_\beta$ umwandeln kann und eine Parameteridentifikationseinheit, die ausgehend von der im Zeitbereich vorliegenden Testsignalspannungen $U_\alpha$, $U_\beta$ und gemessenen Messsignalströme $I_\alpha$, $I_\beta$, eine Parameteridentifikation nach vorgenannten Verfahren durchführen kann. Eine derartige Identifikationseinrichtung kann beispielsweise mehrteilig aufgebaut sein, wobei zur Erzeugung des Testsignals der Motorkontroller einer Motorsteuervorrichtung verwendet werden kann. Die gemessenen Ströme können ebenfalls von der Motorsteuerungsvorrichtung aufgezeichnet werden. Ein externer Rechner kann diese gemessenen und eingespeisten Spannungen und Ströme auslesen, in den Frequenzbereich transformieren und eine Parameteridentifikation durchführen.

Gemäß einer vorteilhaften Weiterbildung der Identifikationseinrichtung kann die Parameteridentifikationseinheit ein Fouriertransformationsmittel, insbesondere ein FFT/DFT-Mittel zur Fouriertransformation diskontinuierlicher $\alpha/\beta$-Abtast-Signalwerte nach dem Welch-Verfahren und ein Parameterbestimmungsmittel, insbesondere ein Levenberg-Marquardt-Übertragungsfunktions-Parameterbestimmungsmittel umfassen. Demgemäß umfasst die Parameteridentifikationseinheit ein Fouriertransformationsmittel zur Überführung der eingespeisten und gemessenen Spannungs- und Strom-Zeitabtastwerte $U_{1\beta}$, $I_{1\beta}$ und ein Parameterbestimmungsmittel, das ausgehend von im Frequenzbereich vorliegenden Übertragungsfunktionen $G = I_{1\beta}/U_{1\beta}$ eine Bestimmung der Übertragungsfunktions-Koeffizienten $a_0$, $a_1$, $a_2$, $b_0$, $b_1$, $b_2$ und $b_3$ vornehmen kann. Die hierzu notwendigen Rechenverfahren können beispielsweise innerhalb eines DSPs, eines Mikrocontrollers eines FPGAs, eines PCs oder eines Kleinrechners durchgeführt werden, wobei eine logische und bauliche Trennung zwischen Testsignalerzeugung, Abtastwertspeicherung, Fouriertransformation und Parameterbestimmung möglich ist. Die Signalverarbeitung und das anschließende numerische Verfahren kann vorteilhaft als Softwareimplementierung zumindest teilweise auf einem Motorregler bzw. Motorsteuerungsvorrichtung vorgesehen sein.

So ist denkbar, das Fouriertransformationsmittel als FPGA aufzubauen, um eine schnelle Fouriertransformation mit Hilfe eines statischen Schaltkreises zu realisieren, und das Parameteridentifikationsmittel als variable Rechensoftware auf einem Hochleistungs-DSP eines Motorsteuerreglers zu implementieren. Eine Testsignalerzeugung und Abtastwertspeicherung kann innerhalb einer Wechselrichter-Motorsteuerungsvorrichtung durchgeführt werden. Fouriertransformation und Parameteridentifikation kann ebenfalls durch eine Motorsteuerungsvorrichtung oder durch eine externe Identifikationseinrichtung, die ein Interface zur Kommunikation mit der Motorsteuerungsvorrichtung aufweist, erfolgen. Somit kann die Motorsteuerungsvorrichtung mit geringer Rechenleistung ausgerüstet sein, und anspruchsvolle signaltheoretische Aufgaben in einer externen Identifikationseinrichtung, die an die Motorsteuerungsvorrichtung anschließbar ist, abgearbeitet werden, wodurch Hardwareaufwand eingespart werden kann.

Gemäß einer vorteilhaften Weiterbildung kann die Einrichtung des Weiteren eine Überwachungs- und Optimierungseinheit umfassen, die eingerichtet ist, auf Basis der mechanischen Kenngrößen Steuerparameter einer Wechselrichter-Steuereinrichtung zu bestimmen, zu optimieren und/oder zu überwachen. Die Überwachungs- und Optimierungseinheit empfängt die bestimmten Kenngrößen der Parameteridentifikationseinheit und kann auf Basis der bestimmten mechanischen Kenngrößen Steuerungsparameter der Motorsteuervorrichtung optimieren, insbesondere hinsichtlich eines dynamischen Reglerverhaltens und/oder Filtereigenschaften, um die Auswirkungen des induktiven Verhaltens des Linear-Asynchronmotors auf das Netz zu verringern. Des Weiteren kann ein effizienter Betrieb der Motorsteuerung optimiert und Motorveränderungen überwacht bzw. beim Motorausfall oder Fehlverhalten ein Fehlersignal ausgegeben werden. Das zu berücksichtigende dynamische Maschinenverhalten kann im Rahmen eines "Condition-Monitorings" durch die Überwachungs- und Optimierungseinheit routinemäßig nach einem bestimmten Zeitintervall oder beispielsweise bei Auswechseln des Motors oder Motorteilen erneut identifiziert werden.

In einem nebengeordneten Aspekt schlägt die Erfindung eine Motorsteuerungsvorrichtung zur geberlosen Steuerung bzw. Regelung eines Linear-Asynchronmotors vor, die eine zuvor beschriebene Identifikationseinrichtung zur geberlosen Identifikation mechanischer Kenngrößen umfasst, wobei die mechanischen Kenngrößen zur Bestimmung, Optimierung und Überwachung des Motors und/oder der Motorsteuerung verwendbar sind. Somit schlägt dieser Aspekt eine Motorsteuerungsvorrichtung vor, die in üblicher Weise eine sensorbasierte oder geberlose Steuerung des Bewegungsverhaltens des Linear-Asynchronmotors vornehmen kann, die eine Identifikationseinrichtung umfasst oder in Verbindung mit einer solchen Identifikationseinrichtung steht, und die die identifizierten Kenngrößen zur Optimierung des Regelverhaltens, zur Bestimmung elektrischer Größen und des Dynamikverhaltens für die Ansteuerung des Motors und für die Überwachung eines fehlerfreien Verhaltens des Linear-Asynchronmotors und/oder der Motorsteuerung verwendet. So können die ermittelten Kenngrößen zur optimalen Einstellung von Steuerungskennlinien dienen, so dass ein dynamisches Regelverhalten überschwingfrei ermöglicht werden kann. Somit können die identifizierten Parameter zur Optimierung des Stromverbrauchs und der Energieeffizienz des Linear-Asynchronmotors herangezogen werden und beispielsweise für eine Filterparametrierung zur Einstellung elektronischer Filter eingesetzt werden oder sie können zur Überwachung des fehlerfreien Verhaltens der Motorsteuerungsvorrichtung und/oder des Linear-Asynchronmotors herangezogen werden. Im Falle eines vorbestimmbaren Abweichens der identifizierten Kenngrößen gegenüber zuvor bestimmten oder vorgegebenen Kenngrößen kann ein Fehlerfall angenommen werden, beziehungsweise eine Neubestimmung der Kenngrößen durchgeführt werden. Im Falle einer Reparatur oder einer Auswechslung des Motors kann die Motorsteuerungsvorrichtung adaptiv die Kenngrößen des neuen Motors identifizieren und sich optimiert auf den neuen Motor einstellen. Eine solche Selbstkalibrierung der Motorsteuerungsvorrichtung kann werksseitig erfolgen, oder beim Einbau der Maschine beim Kunden, beziehungsweise im laufenden Betrieb im Rahmen eines "Condition Monitorings".

In einer vorteilhaften Weiterbildung wird vorgeschlagen, dass die Motorsteuerungsvorrichtung derart eingerichtet ist, dass zumindest bei der erstmaligen Inbetriebnahme, bevorzugt mehrmals im Laufe des Betriebslebens, eine automatisierte Identifikation der mechanischen Größen vornehmbar ist, wobei bei einer vorstellbaren Abweichung der identifizierten mechanischen Kenngrößen von vorherig bestimmten gespeicherten und/oder modellbezogenen Kenngrößen eine Fehlersignalisierung auslösbar ist. Somit schlägt dieser Aspekt vor, dass zumindest bei einer erstmaligen Inbetriebnahme, beziehungsweise einem Testlauf werkseitig, bevorzugt jedoch im Rahmen eines "Condition Monitorings", oder bei Reparatur oder Austausch von Teilen des Motors eine Kenngrößenidentifikation vorgenommen wird, wobei die Motorsteuerungsvorrichtung zur Optimierung, Einstellung und Überwachung des Motors diese mechanischen Kenngrößen berücksichtigen kann. Somit kann eine "universelle" Motorsteuerungsvorrichtung geschaffen werden, die sich adaptiv an eine ganze Reihe unterschiedlicher Linear-Asynchronmotoren anpassen kann, wobei im Motorstillstand eine Identifikation der elektrischen Größen vornehmbar ist. Alterungsbedingte Veränderungen des Motors können durch eine adaptive Korrektur der Reglerparameter berücksichtigt werden und Fehlfunktionen des Motors oder der Motorsteuerungsüberwachung können erkannt werden.

Schließlich wird in einem nebengeordneten Aspekt der Erfindung eine Verwendung des vorgenannten Verfahrens zur Bestimmung, Optimierung und Überwachung von Motorregelparametern für die Steuerung bzw. Regelung elektrischer Antriebe, insbesondere zur Einstellung von Regelungsparametern einer Motorsteuerungsvorrichtung vorgeschlagen. In diesem Aspekt wird vorgeschlagen, dass die ermittelten mechanischen Kenngrößen zur Regleroptimierung, Parametrierung und Überwachung eingesetzt werden. Eine Ermittlung der mechanischen Kenngrößen kann beispielsweise für eine Baureihe von Linear-Asynchronmotoren einmalig an einem Mustermotor vorgenommen werden, und entsprechende Regelparameter für die hierfür eingesetzten Motorsteuerungsvorrichtungen optimiert und angepasst werden. Dies kann werkseitig erfolgen. Ist in einer Motorsteuerungsvorrichtung eine Identifikationseinrichtung vorgesehen oder extern anschließbar, so kann diese im eingebauten Zustand des Motors bei Erstinbetriebnahme, bei Reparaturmaßnahmen oder routinemäßiger oder laufender Zustandsüberwachung ("Condition Monitoring") eine Neuidentifikation der Parameter vornehmen. Hierzu können Teile des Verfahrens, wie die Frequenzbereichstransformation und die Parameterbestimmung, auf einem externen Rechner ausgeführt werden, und andere Teile, wie beispielsweise die Einspeisung des Testsignals und die Konvertierung vom Dreiphasensystem in das Zweikoordinatensystem, innerhalb der Motorsteuerungsvorrichtung vorgenommen werden. Entscheidend ist jedoch, dass die identifizierten mechanischen Kenngrößen zur optimalen Reglerparametrierung, Filtereinstellung, elektrischer Bauteildimensionierung verwendbar sind.

Zeichnungen

Weitere Vorteile ergeben sich aus der folgenden Zeichnungsbeschreibung. In der Zeichnung sind Ausführungsbeispiele der vorliegenden Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen beispielhaft:

**Fig. 1**  ein Ersatzschaltbild einer Primärteilspule eines Linear-Asynchronmotors in Sternschaltung;

**Fig. 2**  Darstellung des Zusammenhangs zwischen Zweikomponenten- und Dreiphasenkoordinatensystems;

**Fig. 3**  schematisch ein Aufbau eines Linear-Asynchronmotors mit Kurzschlussläufer;

**Fig. 4**  ein T-Ersatzschaltbild eines Linear-Asynchronmotors;

**Fig. 5**  ein erstes Ausführungsbeispiel einer Motorsteuerungsvorrichtung der Erfindung;

**Fig. 6**  ein Ausführungsbeispiel einer Motorsteuerungsvorrichtung gemäß der Erfindung;

**Fig. 7**  einen Ablaufplan eines Ausführungsbeispiels eines erfindungsgemäßen Verfahrens;

**Fig. 8**  schematisch ein Ausführungsbeispiel einer Testsignaleinspeisung in ein mathematisches Modell eines Asynchronmotors;

AUSFÜHRUNGSFORMEN DER ERFINDUNG

In den Figuren sind gleiche oder gleichartige Komponenten mit gleichen Bezugsziffern bezeichnet.

Zur Erläuterung der Erfindung zeigt Fig. 1 ein Ersatzschaltbild der Primärteilspule 01 eines Wanderfeldmotors. Jeder Spulenstrang $U$, $V$ und $W$ umfasst einen Spulenwiderstand $R_s$ 03 und eine Spuleninduktivität $L_s$ 05. Die drei Spulenstränge 07 sind an ihrem ersten Ende miteinander verbunden und an ihrem zweiten Ende an die drei Phasen $U$, $V$, $W$ des Ausgangs eines Wechselrichters angeschlossen. Die der Primärteilspule 01 interagiert mit der bewegbar gelagerten Sekundärteilspule 11, in der bei Einprägung eines wandernden Magnetfelds der Primärteilspule 01 eine Spannung induziert wird, die ein entgegen gerichtetes Sekundärteilmagnetfeld erzeugt, durch das sich der Motor bewegt. Die Geschwindigkeit v des Sekundärteils 11 eilt der Magnetdrehgeschwindigkeit $v_w$ der Primärteilspule 01 hinterher, wodurch weiterhin Spannung in das Sekundärteil 11 induziert wird. Der Grad des Nacheilens wird als Schlupf s bezeichnet. Das System aus Sekundärteilspule 11 und Primärteilspule 01 kann statt in einem Drehphasensystem $U/V/W$ in einem Primärteil-Zweikoordinatensystem $\alpha/\beta$ oder Sekundärteil-Zweikoordinatensystem $d/q$ betrachtet werden, woraus das in Fig. 4 dargestellte T-Ersatzschaltbild des Motors abgeleitet werden kann. Dieses T-Ersatzschaltbild entspricht dem eines Drehfeld-Asynchronmotors aufgrund der oben bereits beschriebenen Zusammenhänge.

Hierzu zeigt zunächst Fig. 2 die räumliche Zuordnung des Dreiphasensystems $U/V/W$ mit den drei Koordinatenrichtungen 1 (0°), e$^{j2\pi/3}$ (120°) und e$^{j4\pi/3}$ (240°) gegenüber dem $\alpha/\beta$ Koordinatensystem der komplexen Ebene mit Realteil und Imaginärteil. Unter Annahme eines Gesamtstroms / kann dieser in Bezug auf das Dreiphasensystem in drei Teilströme $I_U$, $I_V$ und $I_W$ aufgeteilt werden. In gleicher Weise kann der Strom durch die Teilströme in komplexen primärteilfesten Koordinatensystem $I_\alpha$ und $I_\beta$ ausgedrückt werden. Die Relation zwischen $I_\alpha$, $I_\beta$ und $I_U$, $I_V$ und $I_W$ sind bereits weiter oben angegeben worden. Unter Verwendung der komplexen Darstellung $I_\alpha$ und $I_\beta$, die die ortsfesten Primärteilachsenrichtungen angeben und den drei Strangströmen $I_U$, $I_V$ und $I_W$ kann die obige Transformationsvorschrift hergeleitet werden. Das Sekundärteil besitzt ein drehendes Koordinatensystem $d/q$, das die Sekundärteil-Flussachse $d$ und Querflussachse $q$ aufweist. Der Zusammenhang zwischen den drehenden Koordinaten $d/q$ und den ortsfesten Koordinaten $\alpha/\beta$ kann durch die Sekundärteilbewegung $\beta_k$ hergestellt werden.

In Fig. 3 ist schematisch der Aufbau eines Linear-Asynchronmotors 09 dargestellt. Dieser umfasst in einer einfachen Ausführung ein dreiphasiges Primärteil 13 mit den Spulensträngen U1, U2 (07-U), V1, V2 (07-V) und W1, W2 (07-W). Das Sekundärteil 11 umfasst einen Kurzschlussläufer, in dem bei einem wandernden Primärteilmagnetfeld Spannung induziert wird, und dessen induzierter Strom ein Gegenmagnetfeld erzeugt, wodurch eine Kraft F des Motors 09 erzeugt wird.

Schließlich zeigt Fig. 4 das Ersatzschaltbild der Verkopplung von Primärteil- und Sekundärteilspulen mit den Strangströmen $I_1$, $I_2$ und $U_1$, $U_2$ wobei der Index 1 für die Primärteilspule und der Index 2 für die Sekundärteilspule steht. Das Ersatzschaltbild nach Fig. 4 ist ein T-Ersatzschaltbild und beschreibt den elektrischen Zusammenhang zwischen Primärteilspule 01 mit $R_1$, $L_{1\sigma}$ 03, 05 und Hauptinduktivität $L_h$ zum Sekundärteil 11 und die Wirkung der Sekundärteilspule mit $R'_2$ und $L'_{2\sigma}$ sowie ebenfalls mit Hauptinduktivität $L_h$. Es kann folgende Admittanzfunktion hergeleitet werden:

$$G_\beta(j\omega) = \frac{I_{1\beta}(j\omega)}{U_{1\beta}(j\omega)} .$$

Aufgabe der vorliegenden Erfindung ist es nun, aus einem Frequenzgang der im Zeitbereich gemessenen Werte der Übertragungsfunktion unter Vorgabe eines in die $\alpha$-Achse eingespeisten Konstantspannung und in die $\beta$-Achse eingespeisten Testsignals eine Identifikation der Masse m zu ermöglichen. Hierbei kann unter Kenntnis der in Fig. 4 dargelegten Ersatzschaltbildgrößen $R_1$, $R'_2$, $L_{1\sigma}$, $L'_{2\sigma}$ und $L_h$, der Polpaarzahl $p$ und der DC-Stromstärke $I_{DC}$ die Koeffizienten der Übertragungsfunktion $G_\beta$ durch eine Parameterbestimmungsverfahren abgeleitet werden. Die koeffizientenbestimmenden Parameter dienen zur Identifikation der Masse m. Ausgehend von der Kenntnis der Masse m kann die Sekundärteildynamik bei eingespeisten Spannungen $U_\alpha$, $U_\beta$ vorhergesagt werden, wobei gewünschte Geschwindigkeiten durch Einstellung der Regelparameter optimiert werden können. Wesentlich dabei ist eine Beschreibung des transienten Verhaltens, wobei eine einzige Analyse des elektrischen Verhaltens des Motors exakte Kenntnis über die mechanischen Parameter während dynamischer Vorgänge ermöglicht.

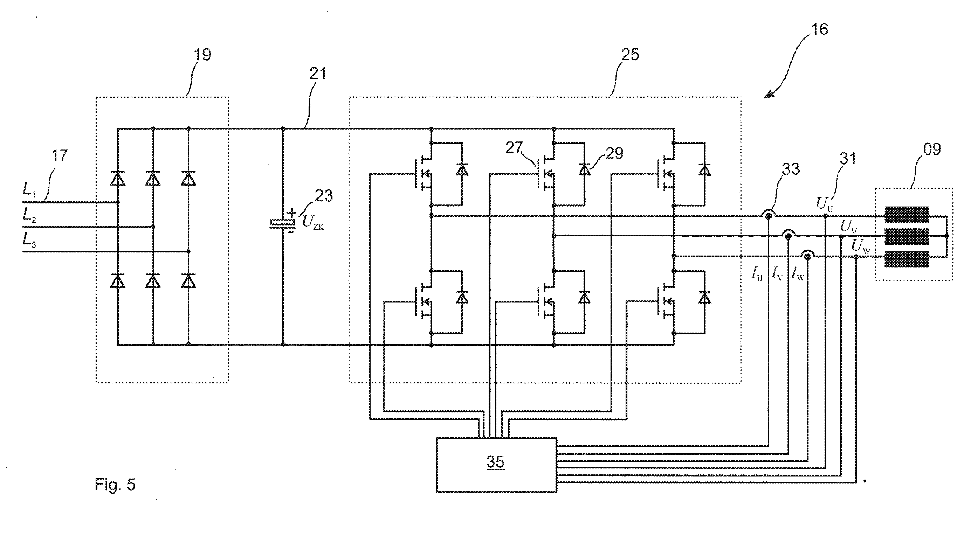

Fig. 5 zeigt schematisch eine Motoransteuerschaltung 16, bei der die Phasen eines Drehstromversorgungsnetzes 17 mittels eines Dreiphasen-Brückengleichrichters 19 in eine Gleichspannung eines DC-Zwischenkreises 21 umgewandelt werden. Im DC-Zwischenkreis 21 ist ein Pufferkondensator 23 vorgesehen, der die Spannung glättet und beispielsweise bei Stromausfall Pufferenergie für einen geregelten Notfahrbetrieb des Motors 09 zur Verfügung stellen kann. Ein Wechselrichter 25 umfasst drei Schaltbrücken, in denen Leistungshalbleiter-Schaltelemente 27 die Motorstränge $U/V/W$ gegenüber der Gleichspannung +DC und -DC des Zwischenkreises 21 koordiniert schalten können, und somit eine PWM-modellierte Ansteuerspannung $U_u$, $U_v$, $U_w$ für den Drehstrommotor 09 bereitstellen. Jedes Leistungshalbleiterschaltelement 27, das ein IGBT-Transistor, ein Leistungstransistor oder Ähnliches umfassen kann, ist mittels einer Freilaufdiode 29 gegen Überspannung, insbesondere induktive Rückwirkung durch den Motor 09, geschützt. Die Strangspannungen $U_\text{u}$, $U_\text{v}$, $U_\text{w}$ 31 sowie Strangströme $I_\text{u}$, $I_\text{v}$, $I_\text{w}$ 33 werden in den Zuführleitungen zu dem Drehstrommotor 09 abgegriffen, und einer Motorsteuerungsvorrichtung 35 zugeführt. Die Strangspannungen müssen nicht notwendigerweise abgegriffen werden, da diese vom Wechselrichter 25 vorgegeben werden können und angenommen wird, dass der Spannungssollwert gleich dem Spannungsistwert ist.

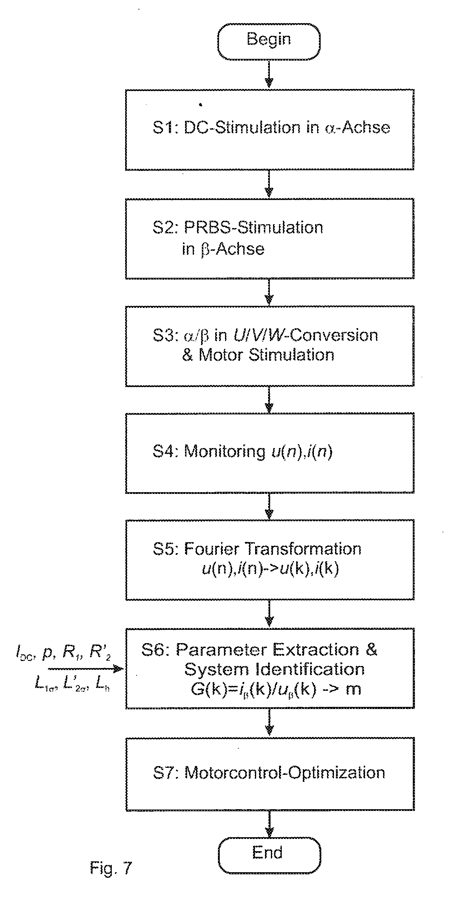

Die Motorsteuerungsvorrichtung 35 umfasst Steuerleitungen, um die einzelnen Leistungshalbleiterschaltelemente 27 je nach gewünschtem Geschwindigkeitsverhalten des Motors 09 phasenrichtig anzusteuern. Im Falle einer sensorbasierten Regelung ist die Motorsteuerungsvorrichtung 35 des Weiteren mit Positions- und Beschleunigungssensoren gekoppelt, wobei auch Temperatursensoren zur Überwachung der Betriebstemperatur des Motors 09 angeschlossen werden können. Im Falle einer geberlosen feldorientierten Regelung kann die Motorsteuerungsvorrichtung 35 lediglich durch Kenntnis der Strangspannungen 31 und gemessenen Strangströmen 33 eine geschwindigkeitsoptimierte Ansteuerung der Wechselrichter-Schaltbauteile 27 vornehmen. Die Regelparameter der Motorsteuerungsvorrichtung 35 können durch Kenntnis des Dynamikverhaltens des Motors 09, der sich durch das in Fig. 4 dargestellte Ersatzschaltbild beschreiben lässt, eingestellt werden. Hierzu umfasst die Motorsteuerungsvorrichtung 35 eine Identifikationseinrichtung 39, wie sie in Fig. 7 dargestellt ist.

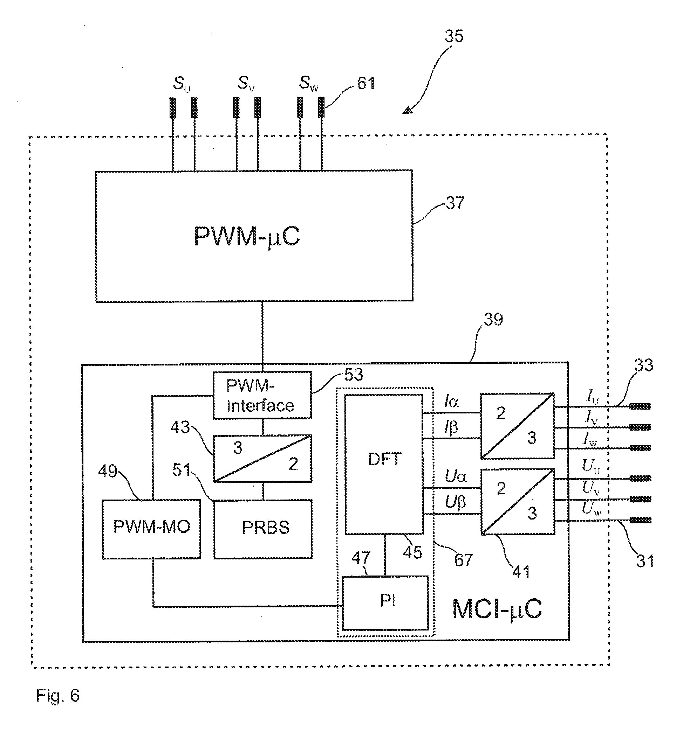

In der Fig. 6 ist ein Ausführungsbeispiel einer Motorsteuerungsvorrichtung 35 dargestellt, die eine Identifikationseinrichtung 39 zur Extraktion mechanischer Kenngrößen des Linear-Asynchronmotors 09 umfasst. Die Motorsteuerungsvorrichtung 35 weist Eingänge zur Erfassung der drei Strangströme $I_\text{U}$, $I_\text{V}$ und $I_\text{W}$ 33 sowie der drei Strangspannungen $U_\text{U}$, $U_\text{V}$ und $U_\text{W}$ 31des Drehstrommotors 09 auf, wobei eine Erfassung von nur zwei Strangspannungen und Strangströmen genügt, da sich die dritte Größe nach Kirchhoff ergibt. Des Weiteren umfasst die Motorsteuerungsvorrichtung 35 Schaltausgänge 61 zur Ausgabe von Wechselrichter-Schaltsignalen für eine Betätigung der Leistungshalbleiter-Schaltelemente 27 des Wechselrichters 25. Die phasenrichtige Erzeugung der Wechselrichter-Schaltsignale 61 erfolgt mittels eines PWM (Pulse-Width Modulation)-Mikrocontrollers, der eine Wechselrichter-Steuereinrichtung 37 darstellt, um sensorlos oder auch sensorgestützt eine Geschwindigkeitsregelung des Drehstrommotors 09 vorzunehmen. Die Identifikationseinrichtung 39 empfängt die Strangspannungen 31 und Strangströme 33 und umfasst eine $\alpha/\beta$-Transformationseinheit 41, die Strangspannungen und Strangströme in die Teilspannung $U_\alpha$, $U_\beta$ sowie Teilströme $I_\alpha$, $I_\beta$ des komplexen Zweikoordinatensystems umwandelt. Die umgewandelten Strangspannungen und Strangströme werden in eine Parameteridentifikationseinheit 67 eingespeist, die zum einen ein Fouriertransformationsmittel 45 und zum anderen ein Parameterextraktionsmittel 47 umfasst. Auf die Zeitbereichsdaten der Strangspannungen und Strangströme wird eine Fouriertransformation angewendet, so dass diese Daten im Frequenzbereich vorliegen und oben definierte Admittanz-Übertragungsfunktionen $G_\beta$ gebildet werden kann. Anstelle der Admittanzfunktion können Parameter einer anderen Übertragungsfunktion, insbesondere Impedanzfunktion oder andere sinnvolle elektrische Funktionsbeziehungen zugrunde gelegt und deren Parameter bestimmt werden. Ausgehend von den Verläufen der Übertragungsfunktionen kann die Parameteridentifikationseinheit 67 des Parameterextraktionsmittels 47 unter Kenntnis der zugrunde liegenden Admittanz-Beschreibungsfunktion die zu identifizierende Parameter aus den Kurvenverläufen extrahieren. Hierzu können Ersatzschaltbildparameter $R_1$, $R'_2$, $L_{1\sigma}$, $L'_{2\sigma}$ und $L_\text{h}$ des in Fig. 4 dargestellten Ersatzschaltbilds einfließen, die zuvor durch ein verwandtes Verfahren oder durch klassische Kurzschluss-, Gleichstrom- und Leerlauf-Messungen ermittelt worden sind. Unter Kenntnis der mechanischen Kenngrößen kann eine Optimierungseinheit 49, die eine Modulierung des Motors sowie eine Optimierung von Parametereinstellungen der Pulsweitenerzeugung vornehmen kann, Steuerparameter sowie Filterparameter für die Parametrierung, Optimierung und Überwachung der Wechselrichter-Steuereinrichtung 37 erzeugen. Diese werden an ein PWM-Interface 53 weitergeleitet und können an die Wechselrichter-Steuereinrichtung 37 übermittelt werden, um eine optimale Regelung des Linear-Asynchronmotors zu ermöglichen.

Im Rahmen der Parameterextraktion wird ein Testsignal in die $\beta$-Primärteilachse und eine Gleichspannung in die $\alpha$-Achse eingespeist, die über eine Testsignalerzeugungseinheit 51 generiert werden können. In diesem Ausführungsbeispiel wird als Testsignal ein Pseudo-Rausch-Binär-Signal (PRBS) erzeugt, das mittels einer *U/V/W*-Transformationseinheit 43 das Rauschsignal als $U_\beta$ bereitstellt und auf die drei Strangspannungen $U_\text{U}$, $U_\text{V}$ und $U_\text{W}$ verteilt. Dieses Testsignal wird an die Wechselrichter-Steuereinrichtung 37 weitergeleitet, die entsprechend den Wechselrichter 25 so steuert, dass der Motor 09 entsprechend dem Testsignal bestromt wird.

In der Fig. 7 ist ein Ausführungsbeispiel eines Programmablaufplans zur Durchführung eines erfindungsgemäßen Verfahrens dargestellt. In Schritt S1 wird zunächst in die $\alpha$-Achse des Sekundärteils eine Gleichspannung $U_{1\alpha}$ eingespeist. In Schritt S2 wird die Einspeisung eines Testsignals als PRB-Signal in die $\beta$-Achse vorgenommen. Aus dem $\beta$-Testsignal und der $\alpha$-Gleichspannung wird eine Konversion in die Strangspannungen $U_\text{U}$, $U_\text{V}$ und $U_\text{W}$ durchgeführt und damit der Motor angesteuert. Die angesteuerten Spannungssignale $U(n)$ sowie die gemessenen Stromwerte $I(n)$ werden im Zeitbereich abgetastet und mittels einer Fouriertransformation, insbesondere einer DFT (Diskreten Fourier Transformation) oder FFT (Fast Fourier Transformation) unter Verwendung einer Welch-Methode, in den Frequenzbereich, d.h. in diesem Fall in den Laplace-Bereich überführt, so dass sich die Frequenzbereichswerte $U(k)$, $I(k)$ ergeben. Im Laplace-Bereich kann eine Übertragungsfunktion der Admittanz dargestellt werden als

$$G_\beta(k) = I_\beta\,(k)/U_\beta\,(k),$$

die die Ausgangsbasis für die Parameterextraktion bildet. Unter Kenntnis der Übertragungsfunktion, der Ersatzschaltbildparameter $R_1$, $R_2$, $L_{1\sigma}$, $L'_2$ und $L_h$, der Polpaarzahl $p$ und der Größe des DC-Stroms der $\alpha$-Achse kann mittels einer Systemidentifikation eine Parameterextraktion, beispielsweise aufbauend auf den Levenberg-Marquardt-Algorithmus durchgeführt werden, um die Übertragungsfunktions-Koeffizienten $a_0$, $a_1$, $a_2$, $b_0$, $b_1$, $b_2$ und $b_3$ aus dem Kurvenverlauf

zu ermitteln. Hieraus kann der Wert des Parameters $k$ und somit die Masse m des Antriebsstrangs ⅃ abgeleitet werden, und zur Einstellung von Motorsteuerungsparametern, zur Optimierung von Lastwechseln und/oder zur Einstellung und Auslegung von Filterparametern für ein Filtern von Motorströmen oder Motorspannungen herangezogen werden. Durch die Kenntnis der Dynamikgrößen des Antriebsstrangs kann eine Parametrierung der Wechselrichter-Steuereinrichtung 37 vorgenommen werden, wobei eine hohe Dynamik des Motorverhaltens durch Optimierung des Regelverhaltens der Wechselrichter-Steuereinrichtung als innerster Regler erreicht werden kann. Dabei können anspruchsvolle Regelungsverfahren, die weit über die Möglichkeiten eines konventionellen PI-Reglers des Asynchronmotors hinausgehen, erreicht werden, da eine präzise Kenntnis der mechanischen Maschinenparameter vorliegt. Insbesondere können die Reglerparameter für einen Zustandsraumregler, einen Dead-Beat-Regler oder einer Modellfolgeregelung exakt eingestellt werden.

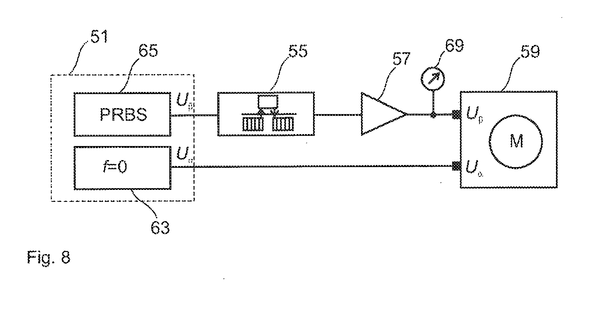

In der Fig. 8 ist schematisch die Einspeisung eines Testsignals einer Testsignal-Erzeugungseinheit 51 in ein mathematisches Modell eines Drehstrommotors 59, im vorliegenden Fall als Linear-Asynchronmotor ausgebildet, als $\alpha/\beta$-Modell im Rahmen einer Matlab-Simulink Simulation dargestellt. Hierzu umfasst die Testsignalerzeugungseinheit 51 ein $\alpha$-Testsignalerzeugungsmittel 63 und $\beta$-Testsignalerzeugungsmittel 65. Das $\beta$-Testsignalerzeugungsmittel 65 erzeugt ein Pseudo-Rausch-Binär-Signal, das mit einer typischen Taktfrequenz einer Wechselrichter-Steuerungseinrichtung 37 mit 16 kHz bereitgestellt wird und mittels einer Abtastratenerhöhungseinheit 55 auf ein quasi zeitkontinuierliches Signal umgewandelt wird, wobei eine Verstärkung des Signals mittels eines Testsignalverstärkers 57 nachgeschaltet ist. Den zeitlichen Verlauf des Testsignals und des Signalstroms $I_\beta$ wird mittels einer Signalaufzeichnungseinheit 69 erfasst. Das PRB-Signal wird als Spannung $U_\beta$ in das mathematische Modell des Drehstrommotors 59 eingespeist. Parallel hierzu erzeugt das $\alpha$-Testsignalerzeugungsmittel 63 eine Konstantspannung, die als $U_\alpha$ in das Modell des Drehstrommotors 59 eingespeist wird, und die einen Konstantstrom $I\alpha=I_{DC}$ erzeugt.

Mit obiger mathematischer Betrachtung ist es gelungen, eine geschlossene analytische Beschreibung der gesuchten Größen herzuleiten. Die Messung der Daten gelingt ausschließlich aus elektrischen Größen, liefert jedoch außerdem die gesuchte Information über die Masse m des Linear-Asynchronmotors, die gemäß (Gl. 3) im Term für $k$ enthalten ist. Dabei beruht die grundsätzliche Idee der Erfindung auf einer signaltheoretischen Betrachtung eines Drehstrom-Elektromotors in einem Zweikoordinatenraum $\alpha/\beta$, wobei unter Konstantbestromung der $\alpha$-Achse mittels einseitiger Einspeisung eines breitbandigen Testsignals, bevorzugt eines PRB-Signals, als Motorspannung $U_\beta$, ein Auswertesignal, das als Motorstrom $I_\beta$ vorliegt, in den Frequenzbereich mittels bevorzugt eines Welch-Verfahrens transformiert werden kann. Aufbauend darauf kann eine Übertragungsfunktion $G_\beta$ aus dem eingespeisten und gemessenen Signal extrahiert werden und mittels einer Parameteridentifikationsmethode, bevorzugt einem Levenberg-Marquardt-Algorithmus, die zugrunde liegenden Systembeschreibungsparameter ausgewertet werden. Durch Kenntnis des formelmäßigen Zusammenhangs der Übertragungsfunktionen können die einzelnen Funktionsparameter identifiziert und damit das mechanische Dynamikverhalten des Motors charakterisiert werden. Besonderen Schwerpunkt legt die Erfindung auf die besondere Einspeisungsart, die Struktur der Übertragungsfunktion und die Analysevorschrift, bei der das Sekundärteil freie Hin- und Herbewegungen zur Bestimmung der Masse m ausführen kann. Das Verfahren bildet das Dynamikverhalten des Motors über einen großen Arbeitsfrequenzbereich bzw. Geschwindigkeitsbereich ab und kann zur Einstellung, Optimierung und Überwachung des Motors verwendet werden. Insbesondere bei Einsatz in einer Motorsteuerungsvorrichtung kann eine universelle Motorsteuerungsvorrichtung bereitgestellt werden, die adaptiv werksseitig oder nach Einbau des Motors bei Verkopplung mit einem mechanischen Abtriebsstrang zur Bestimmung des Motorverhaltens benutzt werden kann. Eine motorschonende und schnelle Bestimmung der maschinenbeschreibenden Parameter wird dadurch ermöglicht. Das Verfahren kann softwaretechnisch in bestehenden Motorsteuerungsvorrichtungen nachgerüstet werden und eröffnet eine automatisierte Identifikation und Überwachung der motorbeschreibenden Parameter.

**Bezugszeichenliste**

01  Primärteilspulen-Ersatzschaltbild eines Linear-Asynchronmotors
03  Spulenwiderstand

05 Spuleninduktivität
07 U/V/W-Sputenstrang
09 Linear-Asynchronmotor
11 Sekundärteil
13 Primärteil
15 Ersatzschaltbild einer Primärteilspule eines Linear-Asynchronmotors
16 Motoransteuerschaltung
17 AC-Versorgungsnetz
19 Dreiphasen-Brückgleichrichter
21 DC-Zwischenkreis
23 Pufferkondensator
25 Wechselrichter
27 Leistungshalbleiter-Schaltelement
29 Freilaufdiode
31 Strangspannung
33 Strangstrom
35 Motorsteuerungsvorrichtung
37 Wechselrichter-Steuereinrichtung
39 Identifikationseinrichtung
41 $\alpha/\beta$-Transformationseinheit
43 *U/V/W*-Transformationseinheit
45 Fouriertransformationsmittel
47 Parameterbestimmungsmittel
49 Optimierungseinheit
51 Testsignal-Erzeugungseinheit
53 Wechselrichtersteuerungs-Interfaceeinheit
55 Abtastratenerhöhungseinheit
57 Testsignalverstärker
59 $\alpha/\beta$-Linear-Asynchronmotor-Modell
61 Wechselrichter-Schaltsignale
63 $\alpha$-Testsignal-Erzeugungsmittel
65 $\beta$-Testsignal-Erzeugungsmittel
67 Parameteridentifikationseinheit
69 Signalaufzeichnungseinheit

**Patentansprüche**

1. Verfahren zur geberlosen Identifikation mechanischer Kenngrößen, insbesondere der Masse m, eines Linear-Asynchronmotors (09) zumindest umfassend die Schritte:

   - Konstantspannungseinprägung $U_{1\alpha}$ in $\alpha$-Achsenrichtung zur Erzeugung eines Konstantmagnetflusses;
   - Testsignalspannungseinspeisung $U_{1\beta}$ in $\beta$- Achsenrichtung des Linear-Asynchronmotors (09), wobei die $\alpha$-Achsenrichtung konstant bestromt bleibt;
   - Meßsignalstrommessung $I_{1\beta}$ in $\beta$-Primärteilachsenrichtung des Linear-Asynchronmotors (09);
   - Identifikation von mechanischen Kenngrößen des Linear-Asynchronmotors (09) auf Basis der Testsignalspannung $U_{1\beta}$ und des Meßsignalstroms $I_{1\beta}$;

   wobei die Testsignaleinspeisung in den Asynchronmotor (09) derart erfolgt, dass das Sekundärteil (11) aufgrund der Testsignaleinspeisung Auslenkungsbewegungen (75) ausführen kann, **dadurch gekennzeichnet, dass** das Testsignal ein Pseudo-Rausch-Binär-Signal ist, welches das Spektrum von weißem Rauschen approximiert.

2. Verfahren nach einem der vorangegangenen Ansprüche, **dadurch gekennzeichnet, dass** das Verhältnis von Konstantspannung $U_{1\alpha}$ zur Testsignalspannung $U_{1\beta}$ derart optimiert wählbar ist, um Auslenkungsbewegung (75) in einer Höhe zu erreichen, so dass die mechanischen Kenngrößen (79) mit einer vorbestimmbaren Genauigkeit ermittelt werden können.

3. Verfahren nach Anspruch 1 oder 2,
**dadurch gekennzeichnet,**
**dass** zur Identifikation der mechanischen Kenngrößen weitere Größen, insbesondere Ersatzschaltbildkenngrößen (03, 05, 15) sowie mechanische Strukturgrößen wie Polpaarzahl und/oder elektrische Meßgrößen wie $I_{1\alpha}=I_{DC}$ berücksichtigt oder ebenfalls identifiziert werden.

4. Verfahren nach einem der vorangegangenen Ansprüche,
**dadurch gekennzeichnet,**
**dass** die Identifikation der mechanischen Kenngrößen eine Fouriertransformation von zeitdiskreten Signalen nach einem Welch-Verfahren umfasst.

5. Verfahren nach einem der vorangegangenen Ansprüche,
**dadurch gekennzeichnet,**
**dass** die Identifikation der mechanischen Kenngrößen eine Übertragungsfunktion-Parameterbestimmung insbesondere nach einem Levenberg-Marquardt-Algorithmus umfasst.

6. Verfahren nach einem der vorangegangenen Ansprüche,
**dadurch gekennzeichnet,**
**dass** die identifizierten mechanischen Kenngrößen bei einer Einstellung und/oder Optimierung von Wechselrichter-Steuerparametern und/oder zur Motorüberwachung verwendet werden.

7. Identifikationseinrichtung (39) zur geberlosen Identifikation mechanischer Kenngrößen, insbesondere der Masse m des Sekundärteils (11), eines Linear-Asynchronmotors (09), insbesondere geeignet zur Durchführung eines Verfahrens nach einem der vorgenannten Ansprüche,
umfassend eine Wechselrichter-Interfaceeinheit (39), die zur steuernden Kommunikation und zur Sekundärteilpositionsbestimmung mit einer Wechselrichter-Steuereinrichtung (37) verbindbar ist, wobei die Identifikationseinrichtung (39) des Weiteren eine Testsignalerzeugungseinrichtung (51) zur Erzeugung eines $\alpha/\beta$-Testsignals, eine *U/V/W*-Transformationseinheit (43) zur Transformation des $\alpha/\beta$-Testsignals in ein *U/V/W*-Steuertestsignal, eine $\alpha/\beta$ Transformationseinheit (41) zur Transformation gemessener *U/V/W*-Meßsignalsströme in $\alpha/\beta$ Meßsignalsströme und eine Parameteridentifikationseinheit (67) zur Identifikation der mechanischen Kenngrößen umfasst,
**gekennzeichnet dadurch,**
**dass** das Testsignal ein Pseudo-Rausch-Binär-Signal ist, welches das Spektrum von weißem Rauschen approximiert.

8. Einrichtung nach Anspruch 7,
**dadurch gekennzeichnet,**
**dass** die Parameteridentifikationseinheit (67) ein Fouriertransformationsmittel (45), insbesondere ein FFT/DFT-Mittel zur Fouriertransformation diskontinuierlicher $\alpha/\beta$-Signalwerte nach dem Welch-Verfahren, und ein Parameterbestimmungsmittel (47), insbesondere ein Levenberg-Marquardt-Übertragungsfunktions-Parameterbestimmungsmittel, umfasst.

9. Einrichtung nach einem der Ansprüche 7 oder 8,
**dadurch gekennzeichnet,**
**dass** sie eine Überwachungs- und Optimierungseinheit (49) aufweist, die dazu ausgebildet ist, auf Basis der identifizierten mechanischen Kenngrößen Steuerparameter einer Wechselrichter-Steuereinrichtung (37) zu bestimmen, zu optimieren und/oder zu überwachen.

10. Motorsteuerungsvorrichtung (35) zur geberlosen Steuerung eines Linear-Asynchronmotors (09)
**gekennzeichnet dadurch,**
**dass** eine Identifikationseinrichtung (39) zur geberlosen Identifikation mechanischer Kenngrößen eines Linear-Asynchronmotors (09) nach einem der vorgenannten Ansprüche 7 bis 9 umfasst ist, wobei die identifizierten Kenngrößen zur Bestimmung, Optimierung und Überwachung der Motorsteuerung verwendbar sind.

11. Motorsteuerungsvorrichtung (35) nach Anspruch 10,
**dadurch gekennzeichnet,**
**dass** die Motorsteuerungsvorrichtung (35) dergestalt eingerichtet ist, dass zumindest bei der erstmaligen Inbetriebnahme, bevorzugt mehrmals im Laufe des Betriebslebens eine automatisierte Identifikation der mechanischen Kenngrößen vornehmbar ist, wobei bei einer voreinstellbaren Abweichung der mechanischen Kenngrößen von zuvor bestimmten, gespeicherten und/oder modellbezogenen Kenngrößen eine Fehlersignalisierung auslösbar ist.

12. Verwendung eines Verfahrens nach einem der Verfahrensansprüche 1 bis 6 zur Bestimmung, Optimierung und Überwachung von Motorreglerparametern für die Steuerung elektrischer Antriebe, insbesondere zur Einstellung von Reglerparametern einer Motorsteuerungsvorrichtung (35).

**Claims**

1. A method for sensor-free identification of mechanical parameters, in particular the mass m, of a linear induction motor (09), comprising at least the steps:

   - impressing the constant voltage $U_{1\alpha}$ in the $\alpha$ axis direction in order to generate a constant magnetic flux;
   - feeding in the test signal voltage $U_{1\beta}$ in the $\beta$ axis direction of the linear induction motor (09), the $\alpha$ axis direction remaining constantly energised;
   - measuring the measuring signal current $I_{1\beta}$ in the $\beta$ primary part axis direction of the linear induction motor (09);
   - identifying mechanical parameters of the linear induction motor (09) on the basis of the test signal voltage $U_{1\beta}$ and of the measuring signal current $I_{1\beta}$;

   the test signal feed into the induction motor (09) taking place such that the secondary part (11) can execute deflection movements (75) on the basis of the test signal feed,
   **characterised in that**
   the test signal is a pseudo noise binary signal which approximates the spectrum of white noise.

2. The method according to any of the preceding claims,
   **characterised in that**
   the ratio of constant voltage $U_{1\alpha}$ to test signal voltage $U_{1\beta}$ can be chosen optimally so as to achieve deflection movement (75) on one level so that the mechanical parameters (79) can be determined with a pre-determinable accuracy.

3. The method according to Claim 1 or 2,
   **characterised in that**
   in order to identify the mechanical parameters, further values, in particular equivalent circuit diagram parameters (03, 05, 15) and mechanical structure values, such as the number of pole pairs and/or electrical measurements such as $I_{1\alpha}=I_{DC}$, are taken into account or also identified.

4. The method according to any of the preceding claims,
   **characterised in that**
   the identification of the mechanical parameters comprises a Fourier transformation of time-discrete signals according to Welch's method.

5. The method according to any of the preceding claims,
   **characterised in that**
   the identification of the mechanical parameters comprises a transfer function parameter determination, in particular according to a Levenberg-Marquardt algorithm.

6. The method according to any of the preceding claims,
   **characterised in that**
   the identified mechanical parameters are used when setting and/or optimising inverter control parameters and/or for monitoring the motor.

7. An identification device (39) for the sensor-free identification of mechanical parameters, in particular the mass m of the secondary part (11) of a linear induction motor (09), in particular suitable for implementing a method according to any of the preceding claims, comprising an inverter interface unit (39) which can be connected to an inverter control device (37) for controlling communication and for determining the secondary part position, the identification device (39) comprising, furthermore, a test signal generation device (51) for generating an $\alpha/\beta$ test signal, a *U/V/W* transformation unit (43) for the transformation of the $\alpha/\beta$ test signal into a *U/V/W* control test signal, an $\alpha/\beta$ transformation unit (41) for the transformation of measured *U/V/W* measuring signal currents into $\alpha/\beta$ measuring signal

currents and a  parameter identification unit (67) for identifying the mechanical parameters,
**characterised in that**
the test signal is a pseudo noise binary signal which approximates the spectrum of white noise.

8. The device according to Claim 7,
**characterised in that**
the parameter identification unit (67) comprises a Fourier transformation means (45), in particular an FFT/DFT means for the Fourier transformation of discontinuous $\alpha/\beta$ signal values by Welch's method, and a parameter determination means (47), in particular a Levenberg-Marquardt transfer function parameter determining means.

9. The device according to either of Claims 7 or 8,
**characterised in that**
it has a monitoring and optimisation unit (49) which is designed to determine, to optimise and/or to monitor control parameters of an inverter control device (37) on the basis of the identified mechanical parameters.

10. A motor control apparatus (35) for the sensor-free control of a linear induction motor (09),
**characterised in that**
an identification device (39) for the sensor-free identification of mechanical parameters of a linear induction motor (09) according to any of the aforementioned Claims 7 to 9 is included, the identified parameters being able to be used to determine, optimise and monitor the motor control.

11. The motor control apparatus (35) according to Claim 10,
**characterised in that**
the motor control apparatus (35) is set up such that at least when  started up for the first time, preferably a number of times over the course of the operating life, automated identification of the mechanical parameters can be undertaken, an error signal being able to be triggered when there is a pre-settable deviation of the mechanical parameters from previously determined, stored and/or model-related parameters.

12. The use of a method according to any of method Claims 1 to 6 for determining, optimising and monitoring motor control parameters for the control of electric drives, in particular for setting control parameters of a motor control apparatus (35).

## Revendications

1. Procédé d'identification sans capteur de caractéristiques mécaniques, en particulier de la masse m, d'un moteur linéaire asynchrone (09), qui comprend au moins les étapes suivantes :

   - application d'une tension constante $U_{1\alpha}$ dans la direction de l'axe $\alpha$ pour produire un flux magnétique constant ;
   - injection d'une tension de signal de test $U_{1\beta}$ dans la direction de l'axe $\beta$ du moteur linéaire asynchrone (09), alors que la direction de l'axe $\alpha$ reste sous tension constante ;
   - mesure du courant de signal de mesure $I_{1\beta}$ dans la direction de l'axe $\beta$ de la partie primaire du moteur linéaire asynchrone (09) ;
   - identification de caractéristiques mécaniques du moteur linéaire asynchrone (09) sur la base de la tension de signal de test $U_{1\beta}$ et du courant de signal de mesure $I_{1\beta}$ ;

   dans lequel l'injection du signal de test dans le moteur asynchrone (09) s'effectue de façon telle que la partie secondaire (11) peut exécuter des mouvements de déviation (75) sous l'effet de l'injection du signal de test, **caractérisé en ce que** le signal de test est un signal binaire de pseudo bruit qui est proche du spectre de bruit blanc.

2. Procédé selon l'une des revendications précédentes,
**caractérisé en ce que** le rapport de la tension constante $U_{1\alpha}$ à la tension de signal de test $U_{1\beta}$ peut être choisi de façon optimisée pour atteindre un mouvement de déviation (75) d'un niveau suffisant pour que les caractéristiques mécaniques (79) puissent être déterminées avec une précision prédéterminable.

3. Procédé selon la revendication 1 ou 2,
**caractérisé en ce que**, pour l'identification des caractéristiques mécaniques, d'autres grandeurs, en particulier des caractéristiques de circuits équivalents (03, 05, 15) ainsi que des grandeurs de structures mécaniques comme le nombre de paires de pôles et/ou des grandeurs de mesures électriques comme $I_{1\alpha} = I_{DC}$, sont prises en compte ou également identifiées.

4. Procédé selon l'une des revendications précédentes,
**caractérisé en ce que** l'identification des caractéristiques mécaniques comprend une transformation de Fourier de signaux à temps discret selon un procédé Welch.

5. Procédé selon l'une des revendications précédentes,
**caractérisé en ce que** l'identification des caractéristiques mécaniques comprend une détermination de paramètres par fonction de transfert, en particulier selon un algorithme de Levenberg-Marquardt.

6. Procédé selon l'une des revendications précédentes,
**caractérisé en ce que** les caractéristiques mécaniques identifiées sont utilisées pour le réglage et/ou l'optimisation de paramètres de commande de l'onduleur et/ou pour la surveillance du moteur.

7. Dispositif d'identification (39) pour l'identification sans capteur de caractéristiques mécaniques, en particulier de la masse m de la partie secondaire (11) d'un moteur linéaire asynchrone (09), en particulier approprié pour la mise en oeuvre d'un procédé selon l'une des revendications précitées,
comprenant une unité d'interface d'onduleur (39) qui peut être reliée à un dispositif de commande d'onduleur (37) pour assurer la communication directrice et la détermination de la position de la partie secondaire, le dispositif d'identification (39) comprenant en outre un dispositif de génération de signal de test (51) destiné à produire un signal de test $\alpha/\beta$, une unité de transformation *U/V/W* (43) destinée à transformer le signal de test $\alpha/\beta$ en un signal de test de commande *U/V/W*, une unité de transformation $\alpha/\beta$ (41) destinée à transformer des courants de signaux de mesure *U/V/W* mesurés en courants de signaux de mesure $\alpha/\beta$, et une unité d'identification de paramètres (67) destinée à l'identification des caractéristiques mécaniques,
**caractérisé en ce que** le signal de test est un signal binaire de pseudo-bruit qui est proche du spectre du bruit blanc.

8. Dispositif selon la revendication 7,
**caractérisé en ce que** l'unité d'identification de paramètres (67) comprend un moyen de transformation de Fourier (45), en particulier un moyen FFT/DFT pour la transformation de Fourier de valeurs discontinues du signal $\alpha/\beta$ selon le procédé de Welch, et un moyen de détermination de paramètres (47), en particulier un moyen de détermination de paramètres par fonction de transfert de Levenberg-Marquardt.

9. Dispositif selon l'une des revendications 7 ou 8,
**caractérisé en ce qu'**il présente une unité de surveillance et d'optimisation (49) qui est conçue pour déterminer, optimiser et/ou surveiller des paramètres de commande d'un dispositif de commande d'onduleur (37) sur la base des caractéristiques mécaniques identifiées.

10. Dispositif de commande de moteur (35) pour la commande sans capteur d'un moteur linéaire asynchrone (09)
**caractérisé en ce qu'**il comprend un dispositif d'identification (39) destiné à l'identification sans capteur de caractéristiques mécaniques d'un moteur linéaire asynchrone (09) selon l'une des revendications 7 à 9 précitées, les caractéristiques identifiées pouvant être utilisées pour la détermination, l'optimisation et la surveillance de la commande du moteur.

11. Dispositif de commande de moteur (35) selon la revendication 10,
**caractérisé en ce que** le dispositif de commande de moteur (35) est conçu de façon telle qu'au moins lors de la première mise en service, de préférence plusieurs fois au cours de la durée de service, il peut être entrepris une identification automatisée des caractéristiques mécaniques, où une signalisation de défaut peut être déclenchée dans le cas d'un écart préréglé entre les caractéristiques mécaniques et des caractéristiques préalablement déterminées, mémorisées et/ou modélisées.

12. Utilisation d'un procédé selon l'une des revendications de procédé 1 à 6 pour la détermination, l'optimisation et la surveillance de paramètres d'un régulateur de moteur pour la commande d'entraînements électriques, en particulier pour le réglage de paramètres du régulateur d'un dispositif de commande de moteur (35).

Fig. 1

Fig. 2

09

11

07U

U1    W2    V1    U2    W1    V2

07W    07V

13

Fig. 3

15

$R_1$    $X_{1\sigma}$    $X'_{2\sigma}$    $R'_2$

$\underline{I}_1$

$\underline{U}_1$

$X_h$    $\underline{U}_q$

$\underline{I}'_2$

$R'_2 \cdot \dfrac{1-s}{s}$

Fig. 4

Fig. 5

Fig. 6

```
                    ╭─────────────╮
                    │    Begin    │
                    ╰──────┬──────╯
                           │
                           ▼
         ┌─────────────────────────────────────┐
         │                                      │
         │    S1: DC-Stimulation in α-Achse     │
         │                                      │
         └──────────────────┬───────────────────┘
                           │
                           ▼
         ┌─────────────────────────────────────┐
         │        S2: PRBS-Stimulation          │
         │            in β-Achse                │
         └──────────────────┬───────────────────┘
                           │
                           ▼
         ┌─────────────────────────────────────┐
         │   S3: α/β in U/V/W-Conversion        │
         │        & Motor Stimulation           │
         └──────────────────┬───────────────────┘
                           │
                           ▼
         ┌─────────────────────────────────────┐
         │      S4: Monitoring u(n),i(n)        │
         └──────────────────┬───────────────────┘
                           │
                           ▼
         ┌─────────────────────────────────────┐
         │     S5: Fourier Transformation       │
         │     u(n),i(n)->u(k),i(k)             │
         └──────────────────┬───────────────────┘
                           │
                           ▼
         ┌─────────────────────────────────────┐
         │   S6: Parameter Extraction &         │
         │      System Identification           │
         │   G(k)=i_β(k)/u_β(k) -> m             │
         └──────────────────┬───────────────────┘
                           │
                           ▼
         ┌─────────────────────────────────────┐
         │     S7: Motorcontrol-Optimization    │
         └──────────────────┬───────────────────┘
                           │
                           ▼
                    ╭─────────────╮
                    │     End     │
                    ╰─────────────╯
```

$I_{DC}, p, R_1, R'_2$
$L_{1\sigma}, L'_{2\sigma}, L_h$ →

Fig. 7

Fig. 8

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19913941 A1
- US 20040119434 A1

**In der Beschreibung aufgeführte Nicht-Patentliteratur**

- **VON MARTIN HENGER.** Sensorlose Positionserfassung in linearen Synchronmotoren. Diplomica Verlag GmbH, 2009
- **SEBASTIAN VILLWOCK.** *Identifikationsmethoden für die automatisierte Inbetriebnahme und Zustandsüberwachung elektrischer Antriebe,* 2007
- **S. VILLWOCK ; J. M. PACAS.** Application of the Welch-Method for the Identification of Two and Three Mass Systems. *IEEE Transactions on Industrial Electronics,* Januar 2008, vol. 55 (1), 457-466
- **P. SZCZUPAK ; J. M. PACAS.** Automatic Identification of a PMSM Drive Equipped with an Output LC-Filter. *IEEE Industrial Electronics, IECON 2006, 32nd Annual Conference,* November 2006, 1143-1148